(19) **Europäisches Patentamt / European Patent Office / Office européen des brevets**

(11) **EP 1 595 110 B1**

(12) **EUROPÄISCHE PATENTSCHRIFT**

(45) Veröffentlichungstag und Bekanntmachung des Hinweises auf die Patenterteilung:
**25.04.2012   Patentblatt 2012/17**

(21) Anmeldenummer: **04705403.6**

(22) Anmeldetag: **27.01.2004**

(51) Int Cl.:
**G01C 3/08** *(2006.01)*      **G01S 7/483** *(2006.01)*
**G01S 17/08** *(2006.01)*      **G01C 15/00** *(2006.01)*

(86) Internationale Anmeldenummer:
**PCT/EP2004/000682**

(87) Internationale Veröffentlichungsnummer:
**WO 2004/074773 (02.09.2004 Gazette 2004/36)**

(54) **VERFAHREN UND VORRICHTUNG ZUR ABLEITUNG GEODÄTISCHER ENTFERNUNGSINFORMATIONEN**

METHOD AND DEVICE FOR EXTRACTING GEODESIC DISTANCE INFORMATION

PROCEDE ET DISPOSITIF D'EXTRACTION D'INFORMATIONS GEODESIQUES DE DISTANCE

(84) Benannte Vertragsstaaten:
**AT BE BG CH CY CZ DE DK EE ES FI FR GB GR HU IE IT LI LU MC NL PT RO SE SI SK TR**

(30) Priorität: **19.02.2003   EP 03003738**

(43) Veröffentlichungstag der Anmeldung:
**16.11.2005   Patentblatt 2005/46**

(73) Patentinhaber: **Leica Geosystems AG**
**9435 Heerbrugg (CH)**

(72) Erfinder:
• **HINDERLING, Jürg**
  **CH-9437 Marbach (CH)**
• **BENZ, Paul**
  **CH-9444 Diepoldsau (CH)**
• **DE LANGE, Martin**
  **CH-8593 Kesswil (CH)**

(74) Vertreter: **Kaminski Harmann**
**Patentanwälte Est.**
**Austrasse 79**
**9490 Vaduz (LI)**

(56) Entgegenhaltungen:
**EP-A- 0 738 899      EP-A- 1 055 941**
**EP-A- 1 085 346**

## Beschreibung

Die Erfindung betrifft ein Verfahren und eine Vorrichtung zur Ableitung geodätischer Entfernungsinformation nach dem Oberbegriff des Anspruchs 1 bzw. 23, sowie ein geodätisches Messinstrument nach Anspruch 29, einen Scanner nach Anspruch 31 und Verwendungen der Vorrichtung nach den Ansprüchen 32 bis 34.

Die Durchführung von Entfernungsmessungen stellt eine technische Standardaufgabe dar, für die eine Vielzahl von Lösungen unter Verwendung von optischen Systemen realisiert wurde, wobei Tachymeter die klassischen Messinstrumente für Vermessungsaufgaben für Geodäsie und Bauindustrie sind. In den letzten Jahren haben sich immer mehr die mit einem reflektorlos messenden Distanzmesser (EDM) ausgerüsteten Tachymeter durchgesetzt.

Anfänglich lagen zu vermessende Reichweiten bei 60m, aber mit der zunehmenden Verbreitung der Instrumente wurden die Anforderungen an deren Reichweite immer grösser. Heute messen die Instrumente bis 200m reflektorlos.

Die traditionellen Distanzmesser basieren vornehmlich auf dem Prinzip der Impulsmethode (Time of flight) oder dem Phasendifferenzverfahren. Aufgrund der hohen geforderten Messgenauigkeit im mm-Bereich sind jedoch derzeit die meisten Instrumente mit einem EDM ausgerüstet, welcher nach dem Phasenmessprinzip arbeitet. Zudem bieten diese bei den distanzmessenden Theodoliten wegen ihres kleineren Volumens Vorteile.

Phasenmesser haben aber wegen den niedrigen optischen Leistungssignalen auf reflektorlose Objekte eine geringe Reichweite, so dass reflektorlose Messungen über Distanzen von mehr als 300m mit einem Phasenmesser kaum zu bewältigen sind. Hingegen sind Laufzeitmesser bezüglich der Reichweite gegenüber den Phasenmessern im Vorteil, da Messungen über Distanzen von 500m auf reflektorlose Ziele ohne weiteres erreichbar sind. Laufzeitmesser sind aber mit dem Nachteil behaftet, dass die absolute Distanzmessgenauigkeit von einem mm kaum erreichbar ist. Eine Übersicht zu den verschiedenen Verfahren und Vorrichtungen zur Entfernungsmessung findet sich beispielsweise in "Elektronische Entfernungs- und Richtungsmessung" von R. Joeckel und M. Stober, 4. Auflage, Verlag Konrad Wittwer, Stuttgart, 1999.

Seit der Einführung und Verbreitung von reflektorlosen Distanzmessern in Totalstationen ist der Benutzer oftmals mit einer weiteren Problematik konfrontiert, welche hauptsächlich bei diesen reflektorlosen Anwendungen auftritt. Insbesondere bei grösseren Messdistanzen oder speziellen Ziel- bzw. Hintergrundgeometrien tritt der Effekt auf, dass der vom Entfernungsmesser ausgesandte Messstrahl gleichzeitig 2 Objekte anstrahlt. Ein Beispiel für diese Problematik stellt die Vermessung einer Kante, z.B. einer Tischkante dar. Wird diese Kante angemessen, dann trifft ein Teil des Strahls die zu vermessende Kante, der andere Teil des Strahls passiert den Gegenstand und beleuchtet ein dahinter liegendes Objekt oder den Boden. Ein weiteres Beispiel stellt ein Retroreflektor dar, der sich neben einem schwach reflektierenden Zielobjekt befindet, so dass Streulicht über den Retroreflektor in den Empfänger der Distanzmesseinheit gelangen kann. Bei einem herkömmlichen Phasenmesser führt dies zu einer falschen Distanzbestimmung die weder dem einen noch dem anderen Zielobjekt zugeordnet werden kann. Insbesondere wenn reflektorlose Distanzmessungen bei grossen Entfernungen durchgeführt werden, steigt die Wahrscheinlichkeit, dass unbeabsichtigt Objekte zwischen dem eigentlichen Messobjekt und dem Instrument angemessen werden. Ein typischer Fall ist auch die Distanzmessung durch Bäume oder Maschenzäune. Bei reflektorlosen Anwendungen kann der Streulichtanteil von solchen Störobjekten zu gravierenden Fehlmessungen führen. Es sollen also auch Situationen bei denen mehrere Objekte gleichzeitig vom optischen Messbündel angestrahlt werden, zu richtigen Distanzauswertungen führen.

Auch ist das von natürlichen Oberflächen rückgestreute Messlicht, insbesondere bei grossen Distanzen, äusserst schwach. Damit verbunden ist die Schwierigkeit, dass bei einer Distanzmessung bei Regen, Nebel oder Schneefall die in der Luft befindlichen Niederschlagspartikel wie ein zusätzliches Zielobjekt mit weicher Oberfläche wirken. Abhängig von der Niederschlagsintensität wirkt sich der störende Einfluss auf die eigentliche Distanzmessung aus. Bei starkem Regen beispielsweise sind Fehlmessungen nicht ausgeschlossen.

Zudem tritt für Phasenmesser die Schwierigkeit auf, dass diese nicht in der Lage sind, Distanzen zu Mehrfachzielen korrekt zu messen. Im Empfangssignal wird die Phase der verschiedenen Zielobjekte in untrennbarer Weise überlagert, sodass mit dem Phasendifferenzverfahren keine erkennbare Trennung in die Anteile der einzelnen Zielobjekte mehr möglich ist. Insbesondere bei Nebel, Regen oder Schneefall sind Fehlmessungen möglich.

Distanzmesser nach der Impulsmethode (Laufzeitverfahren) gehören zu den leistungsstärksten Distanzmessern. Die Reichweite auf reflektorlose Zielobjekte ist hervorragend, wobei auch eine Mehrzielfähigkeit im Prinzip realisierbar ist. Hingegen gehören die mangelnde Distanzmessgenauigkeit und Komplexität der Vorrichtung zu den grossen Nachteilen dieses Messprinzips. Auch bei starkem Regen oder in mit Staub beladener Luft versagen bisherige Laufzeitmesser. Ein Grund dafür ist, dass auch die niedrigen Frequenzanteile im Impulssignal ausgewertet werden, aber gerade diese sind durch Staub oder Schwebeteilchen in der Laufzeit verfälscht.

Ein weiterer Nachteil der Laufzeitmessung wird durch die Laserquelle begründet. Impulslaser mit guter Strahlqualität, wie z.B. Festkörper- oder Mikro-Chip-Laser, sind teuer und aufwendig in der Steuerung und dem Stromverbrauch. Halbleiterlaser sind zwar kostengünstig, jedoch wegen reduzierter bis fehlender räumlicher Kohärenz bisher ungenügend hinsichtlich der Strahlqualität. Bis heute gibt es keinen laserdiodenbasierten Laufzeitmesser, welcher einen Laserstrahl mit kleinem Messfleck erzeugt. Distanzen zu Konturen, wie z.B. Kanten an Objekten, lassen sich daher mit Entfernungsmessern auf der Basis von Halbleiterlasern nicht genau vermessen.

Aus Dokument EP 0 738 899 ist eine Vorrichtung zur Distanzmessung offenbart die die Messstrahlung Pulsmoduliert mit Anregunspulsen einer Pulsbreite unterhalb von zwei Nanosekunden.

Damit stellt sich als ein wesentlicher Nachteil aller bisher bekannten Messprinzipien entweder die fehlende Reichweite auf reflektorlose Zielobjekte oder die unzureichende Messgenauigkeit dar.

Ein weiterer Nachteil ist die technisch nicht realisierte Mehrzielfähigkeit. In der geodätischen Vermessung sind bis heute keine Distanzmesser bekannt, die Mehrfachziele zuverlässig unterscheiden und damit Entfernungsmessungen zu verschiedenen Zielen sicher ermöglichen.

Die Aufgabe der vorliegenden Erfindung besteht daher in der Bereitstellung eines neuen Distanzmessverfahrens mit einer hierfür geeigneten Vorrichtung, welche insbesondere reflektorlose Messung sowohl bei grossen Distanzen zulässt als auch gleichzeitig eine hohe Messgenauigkeit im mm-Bereich aufweist.

Eine weitere Aufgabe der Erfindung besteht darin, auch eine korrekte Vermessung von Mehrfachziele zu ermöglichen.

Eine weitere Aufgabe der Ereindung besteht in der Verringerung der Abhängigkeit von allgemeinen atmosphärischen Einflüssen, wie z.B. Staubgehalt oder Rauch, so dass präzise Distanzmessungen unabhängig von diesen Einflüssen ermöglicht werden.

Als weitere Aufgaben bzw. zu erfüllende Anforderungen bestehen darüber hinaus eine kurze Messzeit innerhalb von Sekunden, die robuste und unbeeinflusste Distanzmessung bei speziellen meteorologischen Bedingungen, wie z.B. Nebel, Regen oder Schneefall, sowie die Integrierbarkeit einer geeigneten Vorrichtung in geodätischen Systemen, wie z.B. Theodoliten. Diese Integrierbarkeit wird durch eine Miniaturisierbarkeit bzw. ein kleines Bauvolumen, modulartige Auslegung und einen reduzierten Energieverbrauch unterstützt.

Diese Aufgaben werden erfindungsgemäss durch die kennzeichnenden Merkmale der Ansprüche 1 und 23 sowie durch die kennzeichnenden Merkmale der Unteransprüche gelöst bzw. die Lösungen fortgebildet.

Die Lösung basiert auf dem Konzept eines elektro-optischen Entfernungsmessers nach dem Prinzip einer "System-Analyse". Es handelt sich dabei weder um einen reinen Laufzeitmesser noch um einen reinen Phasenmesser. Das Distanzmesssystem besteht nun aus den zur Aussendung eines optischen Signals notwendigen Komponenten, der Messstrecke mit wenigstens einem Ziel, gegebenenfalls einer geräteinternen Referenzstrecke und den zum Empfang des Signals notwendigen Komponenten. Definiert wird das System jeweils über Schnittstellen, die als Systemein- und -ausgang fungieren. Der Distanzmesser bestehend aus Sende- und Empfangseinheit zusammen mit Messtrecke und Zielobjekt wird als Übertragungssystem eines optoelektronischen Signals interpretiert. Im folgenden wird dieses Übertragungssystem der Einfachheit wegen als System bezeichnet. Damit sind Zielobjekte Bestandteil des Systems. Mit dem erfindungsgemässen Verfahren wird das System analysiert, insbesondere werden die Anzahl der Laufzeiten zu den einzelnen Zielen (Totzeiten) und deren Dauer ermittelt. Im Prinzip wird eine Systemidentifikation durchgeführt, wobei ein Schwerpunkt auf der Ermittlung der Laufzeiten zu den mit dem Messstrahl angestrahlten Zielobjekten liegt.

Die mögliche höhere Empfindlichkeit des erfindungsgemässen Verfahrens resultiert aus verschiedenen Faktoren. Zum einen werden bei einer gezielten Auswahl von Modulationsfrequenzen Anregungssignale ausgesendet, empfangen und deren Signalform abgetastet und ausgewertet. Diese Signalform kann beispielsweise eine Folge von Diracstössen aufweisen, wobei jedoch auch sinusförmige Anregungssignale wie bei Phasenmessern möglich sind. Zum andern wird im erfindungsgemässen Verfahren die gesamte Signalinformation und nicht nur wie beim Phasendifferenzverfahren die Phasen oder beim Impulslaufzeitmessverfahren die Laufzeiten zur Distanzbestimmung ausgewertet. Das erfindungsgemässe Verfahren berücksichtigt bei der Auswertung simultan die gesamten seriell erfassten Messdaten, wobei beispielsweise alle Mess- und Modell-Informationen in einer Kostenfunktion aggregiert bzw. zusammengefasst werden. Damit wird keine Phasenmessung durchgeführt, sondern es werden die <u>Signalform</u> in der Zeitdomäne oder Frequenzdomäne, aber auch Kanalverstärkung, Rauschen, etc. messtechnisch erfasst und in die erfindungsgemässe Auswertung einbezogen. Auch erfolgt die Signalauswertung vorzugsweise nach einer Kosten-Funktion basierend auf dem Maximum Likelihood-Prinzip (Optimal-Schätzer). Im Unterschied zu den bisherigen Phasenmessern kann wegen dem flexiblen und schnell umschaltbaren Frequenzsynthesizer zudem in Abhängigkeit von der Anzahl der Zielobjekte und deren gegenseitigen Abstand die Modulationsfrequenzen der Anregungssignale gezielt verändert oder selektiert werden. Durch einen optimal konditionierten Satz von Messdaten kann die Systemanalyse mit erhöhter Präzision realisiert werden. Beispiele sind die Reduktion von Störeinflüssen durch Mehrfachreflexionen zwischen Zielobjekt und Distanzmessvorrichtung oder auch der Umgehung von störender Signalüberlagerung bei Mehrfachzielen.

Die erfindungsgemässe Systemidentifikation basiert auf der Emission einer Anzahl von Modulationsfrequenzen, die grösser als bei einem herkömmlichen Phasenmesser ist. Eine Erzeugung der vielen Modulationsfrequenzen ist beispielsweise mit einem DDS-Synthesizer (Direct digital synthesizer) oder einem anderen modernen "Frequency Hopping Device" wie dem "Fractional-N-Synthesizer" realisierbar. Die Signalerzeugung kann erfindungsgemäss beispielsweise nach dem Prinzip der Direktsynthese erfolgen, eine in einem internen Speicher abgelegte Signalform wird dabei mit periodischer Wiederholung sequentiell einem Digital-Analogwandler zugeführt und an den Ausgang gegeben (Arbiträrgenerator) .

Die Auswertung erfolgt für jede einzelne Modulationsfrequenz separat oder aber aggregiert für mehrere Modulationsfrequenzen. Die optional separate Auswertung ist dabei vorwiegend bei gutem Empfangssignal realisierbar, beispielsweise als Suboptimalschätzer. Bei der Aggregation werden alle Signaldaten in ein gemeinsames Modell hineinverechnet und für eine Parameterschätzung, insbesondere der Laufzeiten, verwendet, beispielsweise als ein Optimalschätzer.

Vorzugsweise werden lediglich hohe Modulationsfrequenzen im MHz- bis GHz-Bereich ausgesendet, damit wird das System selektiv betreffend Laufzeiten von harten Zielen und blind betreffend weiche Ziele wie Regen, Nebel oder Schneefall. Ein weiterer Vorteil der Verwendung hoher Frequenzen ist die damit gesteigerte Distanzmessgenauigkeit. Bei ausschliesslich hohen Frequenzen trägt jede Frequenz zum Schlussresultat der Parameterbestimmung bei. Dies ist beim herkömmlichen Phasenmesser nicht der Fall. Dieser Vorteil existiert jedoch auch gegenüber dem Laufzeitmesser, die statistische Mittelung erfolgt dort wegen der niedrigen Pulsrepetitionsrate über 1000-mal weniger Impulse, was zu einer geringeren Messgenauigkeit führt.

Die Wahl des/der Sets oder der Schar aller Modulationsfrequenzen beeinflusst die Qualität des Ergebnisses der Systemanalyse. Beispielsweise kann eine robuste Distanzmessung bei kleinem Empfangssignal insbesondere an der Signalgrenze bei grossen Zieldistanzen durch optimale Wahl der Frequenzen erreicht werden. Die Wahl des/der Sets aller Frequenzen bestimmt zudem auch die maximal eindeutig aufzulösende Reichweite (Eindeutigkeit). Wird die Schar aller Frequenzen, wie beispielsweise durch einen DDS-Synthesizer, flexibel gehandhabt und der zu lösenden Messaufgabe angepasst, so werden auch Störeffekte durch Mehrfachreflexionen zwischen Zielobjekt und Distanzmessvorrichtung, als auch unerwünschte Signalüberlagerungseffekte bei Mehrfachzielen behoben.

Dabei liegt eine Stärke der digitalen Signalsynthese in der Möglichkeit des flexiblen Frequenzkonzepts und damit der optimalen Anpassung der Schar aller Frequenzen an das zu analysierende Distanzmesssystem bestehend aus Vorrichtung und Messstrecke.

Mit dem erfindungsgemässen Distanzmessverfahren bzw. der Vorrichtung kann im Gegensatz zu einem Phasenmesser auch auf gestaffelte Ziele gemessen werden, wie beispielsweise eine Messung durch eine Fensterscheibe. Der Distanzmesser bestimmt gleichzeitig die Distanzen zu mehreren Zielen, welche sich im Lichtstrahl befinden. Das optimale Frequenzkonzept ist in diesem Fall ein anderes als im EinZielfall.

Das erfindungsgemässe Distanzmessverfahren ist mehrzielfähig. Dadurch wird es möglich, simultan die Distanz eines internen Referenzlichtwegs zu vermessen. Der interne Referenzlichtweg ist das erste Zielobjekt, die Distanzen aller weiteren Zielobjekte werden relativ zum bekannten Referenzobjekt vermessen. Die Distanzmessung ist dadurch frei von Temperaturdriften und weiteren dispersiven Einflüssen. Damit ist die Multizielfähigkeit für eine simultane Kalibrierung über einen internen Referenzlichtweg nutzbar, so dass ein bisher notwendiger geräteseitiger Aufwand, wie er aus der selektiven Schaltung einer Referenzstrecke oder der Verwendung eines zweiten Referenzempfängers resultiert, vermieden wird.

Das erfindungsgemäss definierte, mathematische System umfasst die Distanzmesseinheit, die beteiligten Zielobjekte und die Abstände zu den Zielobjekten. Dieses System wird im Sinne der Nachrichtentechnik als lineares Übertragungssystem verstanden, dessen Systemverhalten durch die Angabe der sogenannten Impulsantwort h(t) beschrieben wird. Dies ist die Antwort des Systems, falls es mit einem Diracstoss angeregt wird. Die Fouriertransformation der Impulsantwort wird als Übertragungsfunktion H(ω) oder komplexer Frequenzgang bezeichnet, wobei diese eine der möglichen Beschreibungen des Systems im Frequenzraum bzw. Frequenzbereich oder Frequenzdomäne darstellt.

Da die Systeme meist mit kausalen Signalen angeregt werden, ist es auch möglich, anstelle der Fouriertransformation die etwas allgemeinere und bezüglich Konvergenz stabilere Laplace-Transformation zu verwenden.

Bei periodischen Anregungssignalen kann jedoch meist die Fouriertransformation (FT) als genügend betrachtet werden. Die Defintion der im allgemeinen komplexwertigen Übertragungsfunktion H(ω) eines Systems ist dann wie folgt gegeben:

$$H(\omega) = \frac{Y(\omega)}{S(\omega)} \qquad (1)$$

Die systembeschreibende Übertragungsfunktion ist der Quotient zwischen dem jeweils fouriertransformierten Empfangsignal y(t) und fouriertransformierten Anregungssignal s(t).

FT: $y(t) \rightarrow Y(\omega)$
FT: $s(t) \rightarrow S(\omega)$

Der komplexwertige Frequenzgang des Systemanalysators hat folgende Form:

$$H(\cdot\omega) = \frac{a_n \cdot (i \cdot \omega)^n + a_{n-1} \cdot (i \cdot \omega)^{m-1} + \ldots a_0 \cdot (i \cdot \omega)^0}{b_m \cdot (i \cdot \omega)^m + b_{m-1} \cdot (i \cdot \omega)^{m-1} + \ldots b_0 \cdot (i \cdot \omega)^0} \cdot \left( \sum_{k=1}^{d} \rho_k \cdot \exp(-i \cdot \omega \cdot t_k) \right) \qquad (2)$$

Wobei $\omega$ die Kreisfrequenz und i die imaginäre Einheit bezeichnet und mit der Frequenz f wie folgt verknüpf ist: $\omega = 2 \cdot \pi \cdot f$. Im weiteren sind: d die Anzahl der angestrahlten Zielobjekte, $\rho_k$ den Reflexionsgrad und $t_k$ die zur Distanz proportionale Signallaufzeit. Die zu vermessenden Distanzen berechnen sich gemäss $D_k = \dfrac{c}{2 \cdot t_k}$, wobei c die Lichtgeschwindigkeit bedeutet.

Die Frequenzen erfahren durch das System Verstärkung, Abschwächung und Phasenverschiebung.Die Übertragungsfunktion besteht aus zwei im physikalischen Verhalten grundsätzlich verschiedenen Termen: einem rationalen Quotienten und einer Summe aus Exponentialfunktionen mit der Kreisfrequenz als linearem Argument.

Der erste Koeffizient (Quotient) beschreibt die sogenannten dispersiven Einflüsse, erzeugt durch die elektronischen Bauteile wie Laserdiode, Empfangsdiode und Filter. Diese bewirken Amplituden- und Phasen-Änderungen vom Eingang bis zum Ausgang des Systems.

Der zweite Faktor besteht aus einer Summe von Exponentialfunktionen und beschreibt die gesuchten Tot- oder Laufzeiten zwischen der Distanzmesseinheit und den einzelnen Zielobjekten. Die Bestimmung der Totzeiten entspricht der Messung der einzelnen Distanzen zu den betreffenden Objekten.

Um eine Messung der Lauf- bzw. Totzeiten des Systems mit hoher Genauigkeit zu ermöglichen, muss der erste als Quotient dargestellte Faktor entweder rechnerisch eliminiert oder mittels einer Systemkalibration gemessen und eliminiert werden.

Dies kann beispielsweise durch eine Systemkalibration des Herstellers gewährleistet werden, die vor der Auslieferung im Rahmen der Herstellung oder nachfolgend turnusgemäss erfolgt. Insbesondere bei schlecht abschätzbaren Alterungseffekten, die beispielsweise frequenzabhängige Laufzeitverzögerungen bewirken, ist eine ständige Systemkalibration "im Feld" unmittelbar vor oder während der eigentlichen Distanzmessung vorteilhaft.

Vorzugsweise ist eine solche Systemkalibration in zeitlichem Zusammenhang mit der Distanzmessung zu realisieren. Hierfür wird Messlicht über einen internen Lichtweg bekannter Länge geleitet. Damit sind die Informationen des ersten Terms in der Übertragungsfunktion bei den applizierten Anregungsfrequenzen erfasst.

Nachfolgend oder parallel wird die eigentliche Distanzmessung durchgeführt. Das Messlicht wird dabei auf die externen Zielobjekte geleitet. Diese externe Systemvermessung wird vorzugsweise bei denselben Frequenzen wie beim internen Lichtweg durchgeführt, d.h. es wird die Übertragungsfunktion gemessen. Im Stand der Technik sind hingegen nur aufwendige Lösungen mit schaltbaren Referenzstrecken oder doppelter Auslegung von Sender oder Empfänger bekannt. Beispielsweise offenbart EP 0 738 899 eine schaltbare Referenzstrecke, EP 0 932 835 zeigt die Verwendung von zwei Empfängern und DE 40 02 356 offenbart die Verwendung von zwei schaltbaren Sendern.

Erfindungsgemäss kann die Messung über den internen Lichtweg aber auch simultan zur Messung über den externen Lichtweg erfolgen, da das Verfahren in der Lage ist, Mehrfachziele mit hoher Genauigkeit auszuwerten, wobei die interne Referenzstrecke als ein erstes von mehreren Zielen erfasst wird. Dabei besteht keine Notwendigkeit, Komponenten des Systems zu duplizieren oder Referenzstrecken schaltbar auszulegen wie dies bei einigen Lösungen des Stands der Technik notwendig ist.

Ein erfindungsgemässer Weg zur technischen und rechnerischen Realisierung der Systemkalibration ist die Bestimmung der Übertragungsfunktion H($\omega$) bei einer ausgewählten Menge von Frequenzen (irregular or regular frequency sampling) und zwar einerseits über den internen Lichtweg andererseits über den externen Messlichtweg.

Für die Systemkalibration kann Gleichung (1) komplett in Polar- oder Exponentialdarstellung notiert werden:

$$H(\cdot\omega) = |H(\omega)| \cdot \exp\left(-i \cdot \omega \cdot t_{disp}(\omega)\right) \cdot \left( \sum_{k=1}^{d} \rho_k \cdot \exp\left(-i \cdot \omega \cdot t_k\right) \right)$$

Durch die Systemkalibration wird die Systemverstärkung $|H(\omega)|$ und die Dispersion $t_{disp}(\omega)$ bei den im Messsignal ausgesendeten Frequenzen bestimmt. Daher können diese bei der eigentlichen Distanzmessung auf die Zielobjekte als bekannt angenommen werden.

Die Korrektur berücksichtigt daher unter anderem die Verstärkung/Abschwächung und die dispersiven Verzögerungszeiten bei den gemessenen Frequenzen. Diese unerwünschten Effekte sind in den ersten beiden Termen der Übertragungsfunktion beinhaltet.

Die Berechnung der Übertragungsfunktion geschieht beispielsweise mittels der diskreten Fouriertransformation (DFT). Das Empfangssignal wird mit einem Analog-Digital-Wandler (ADC) im Zeitbereich abgetastet und anschliessend mittels DFT die im Messsignal enthaltenen Frequenzen die komplexwertige Amplitude $Y(\omega)$ berechnet. Mit $Y(\omega)$ sind auch die Systemverstärkung $|H(\omega)|$ und die Dispersion $t_{disp}(\omega)$ bekannt.

Durch den Vergleich der frequenzabhängigen Amplituden-, Phasen- und Rausch-Ergebnisse von internem und externem Messweg gelingt daher eine Korrektur der Übertragungsfunktion in der Art, dass von $H(\omega)$ oder $H(f)$ nur noch der Term mit den Totzeiten $t_k$ in der Exponentialsumme als Unbekannte stehen bleibt.

Damit folgt als Übertragungsfunktion der kalibrierten Daten:

für den Ein-Ziel-Fall:

$$Hc(f) := \rho_1 \cdot \exp(-i \cdot 2 \cdot \pi \cdot f \cdot t_1)$$

für den Mehr-Ziel-Fall mit d Zielen:

$$Hc(f) := \sum_{k=1}^{d} \rho_k \cdot \exp(-i \cdot 2 \cdot \pi \cdot f \cdot t_k)$$

wobei die kalibrierten Laufzeiten zu den angemessenen Zielobjekten aus Vereinfachungsgründen wieder mit $t_k$ bezeichnet sind.

Die Systemkalibration kann auch in der Zeitdomäne direkt durchgeführt werden. Dabei werden an Stelle der Übertragunsgfunktion $H(f)$ die Laufzeiten der Systemantworten zu den verschiedenen Anregungssignalen über den internen Lichtweg ermittelt.

Eine Systemkalibration im Sinne der Maximum-Likelihood-Schätzertheorie ermöglicht auch alle gemessenen Systemantworten in eine einzige Kostenfunktion zusammenzufassen um daraus kalibrierte Distanzmessdaten zu den Zielobjekten auszuwerten.

Bei Kenntnis des gesamten, kontinuierlichen Spektrums kann die entsprechende Impulsantwort des Systems durch die inverse Fouriertransformation (IFT) berechnet werden:

$$h(t) := \int H(f) \cdot \exp(+i \cdot 2 \cdot \pi \cdot f \cdot t) df \qquad (4)$$

Entspricht $H(f)$ Gleichung 3 und ist bei allen Frequenzen bekannt, dann lässt sich das Integral geschlossen lösen. Die Impulsantworten lauten:

für den Ein-Ziel-Fall:

$$h(t) := \rho_1 \cdot \delta(t - t_1)$$

für den Mehr-Ziel-Fall mit d Zielen:

$$h(t) := \sum_{k=1}^{d} \rho_k \cdot \delta(t - t_k)$$

Es ist ersichtlich, dass die Impulsantwort direkt die gesamten Distanzinformationen $t_k$ zu den d sich im Messstrahl befindlichen Zielobjekten enthält.

Gleichungen 3 und 4 sind auch gültig, falls nicht direkt bei den Modulationsfrequenzen sondern heterodyn oder homodyn gemessen wird. Dabei wird das hochfrequente Empfangssignal mit einem hochfrequenten Mischersignal auf ein niederfrequentes elektronisches Signal heruntergemischt. Durch Auswertung des niederfrequenten Signals können Amplitude und Phase des eigentlichen hochfrequenten Empfangssignals bestimmt werden.

Bei den Realisierungsformen einer erfindungsgemässen Distanzmessvorrichtung wird nicht das gesamte komplexe Spektrum H(f) des Systems gemessen, die Mess- oder Sendesignale regen das System nur bei einer Teilmenge aller System-Frequenzen an, im Normalfall sind es lediglich eine Schar von diskreten Frequenzen die vermessen werden. Das Spektrum H(f) ist also nicht für jede Frequenz sondern nur punktweise bekannt.

Auch die Rekonstruktion der Impulsantwort h(t) als Zeitsignal mittels IFT ist daher nicht ohne weiteres möglich.

Die Problematik besteht grundsätzlich in der Berechnung der Parameter der Laufzeiten $t_k$ in den Gleichungen 3 beziehungsweise der Gleichung 4.

Zur Berechnung der Laufzeiten bzw. Distanzen eignen sich diverse Auswerte-Methoden. Die Auswahl der jeweils optimalen Methode ist abhängig von systemspezifischen Zustandsmerkmalen. Zu diesen charakteristischen Merkmalen eines Systems gehören beispielsweise: Anzahl der Ziele, Distanzen zu den Zielen, Reflexionsvermögen der Ziele, Signalamplituden, Grösse der Rauschpegel, etc.

Zum Ableiten einer Distanzinformation kann entweder die gesamte Signalform y(t) oder lediglich ein Teil der Signalform herangezogen werden, wobei unter einem solchen Teil beispielsweise folgende Grössen verstanden werden können: Maximalwert der Signalform y(t), Amplitude der ersten Harmonischen oder Fläche unter der Kurve y(t) innerhalb der Halbwertsbreite eines Signalimpulses. Im Falle einer statistischen Auswertemethode wird auch das RMS-Rauschen der Signalform y(t) als Teil einer Signalform verstanden.

Der Hauptteil der Distanzinformation steckt in der zeitlichen Struktur der Signalform. Beispiele hierfür sind die zeitliche Verschiebung der Systemantworten y(t) gegenüber dem Anregungssignal s(t), insbesondere aber auch die gegenseitigen, relativen zeitlichen Abstände von reflektierten Impulsen bei Systemen mit Mehrfachzielen. Im Sinne einer Momenten-Analyse kann auch die zeitliche Lage des Schwerpunkts eines oder mehrerer Signalimpulse als Beispiel einer zeitlichen Struktur der Signalform verstanden werden.

Im folgenden werden rein exemplarisch und nicht abschliessend einige Möglichkeiten der Auswertung in der Zeit- oder Frequenzdomäne beschrieben.

Eine erste Methode der Distanzbestimmung ist die Auswertung im Zeitbereich. Werden beispielsweise die Laufzeiten von periodischen Impulsen kurzer Dauer bei verschiedenen Pulsraten nacheinander vermessen, so kann die Distanz eindeutig mit hoher Präzision berechnet werden.

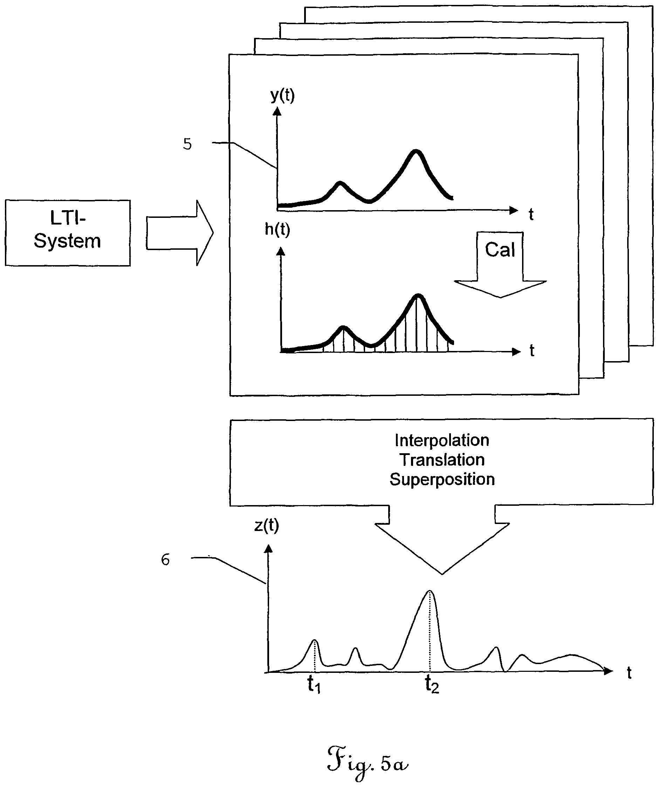

Bei der Distanzbestimmung im Zeitbereich ist die optimale Wahl der Pulswiederholfrequenzen relevant. Diese sind so zu legen, dass die reflektierten Signale von Mehrfachzielen zeitlich getrennt auf den Empfänger fallen. Dadurch werden störende Überlagerungen von Signalimpulsen vermieden und jedem Zielobjekt ist ein einzelner Signalimpuls zuordenbar. Diese optimierte Frequenzwahl ist erfindungsgemäss mit Hilfe des Frequenzsynthesizers möglich. Ein Beispiel einer Auswertemethode ist in Fig. 5a dargestellt. Jedes Anregungssignal s(t) erzeugt ein Antwortsignal y(t). Daraus werden mittels Signalen über den internen Lichtweg kalibrierte Signalantworten h(t) abgeleitet. Diese kalibrierten Signalantworten h(t) aller Anregungssignale s(t) sind gegeneinander zeitlich verschoben, wobei die relativen Verschiebungszeiten $\Delta t_{jk}$ beispielsweise durch Kreuzkorrelations- oder Schwerpunktsberechnung bestimmt werden können. Diese Verschiebungszeiten $\Delta t_{jk}$ geben Aufschluss über die Anzahl der Impulse, welche auf der Übertragungsstrecke unterwegs sind (Eindeutigkeit).

In einem weiteren Schritt kann ein Zeitsignal z(t) konstruiert werden, welches aus der Summe der zeitlich verschobenen Signalantworten $h_k(t-\Delta t_{jk})$ aller Anregungssignale $s_k(t)$ gebildet wird. Aus z(t) werden dann abschliessend die Laufzeiten $t_n$, beispielsweise wieder mit einer Kreuzkorrelations- oder Schwerpunktsberechnung, bestimmt.

Eine weitere Methode ist die nichtlineare Ausgleichsrechnung zwischen dem spektralen Modell der Übertragungsfunktion H(f) gemäss Gleichung 3 und den Messpunkten $H(f_k)$ bei den analysierten Modulationsfrequenzen.

Eine andere Methode der Distanzschätzung beruht auf dem Prinzip eines Maximum-Likelihood-Schätzers. Dabei werden die gemessenen Spektraldaten in eine Kostenfunktion eingegeben, das globale Maximum beziehungsweise Minimum dieser Funktion ergibt dann die Schätzwerte für die d Distanzen.

Im Einzielfall ist der Maximum-Likelihood-Schätzer eine einfache eindimensionale Kostenfunktion mit einem ausgeprägten globalen Maximum. Bei geeigneter Auswahl der diskreten Messwerte des komplexwertigen Spektrums sind im Einzielfall auch andere Methoden realisierbar, die ebenfalls eine präzise und robuste Distanzberechnung ermöglichen. Beispielsweise kann die inverse Fouriertransformation der diskreten Frequenz-Samples als Approximation der Maximum-Likelihood-Funktion interpretiert werden.

Für den Ein-Ziel-Fall gilt dann:

$$z(t) := \frac{1}{N} \cdot \sum_{k=0}^{N-1} H(f_k) \cdot \exp(i \cdot 2 \cdot \pi \cdot f_k \cdot t) \tag{5}$$

Die im allgemeinen komplexwertige Funktion z (t) wird damit direkt aus allen N gemessenen komplexwertigen Amplituden $H(f_k)$ des diskreten Frequenzspektrums berechnet und entspricht einem Zeitsignal, wobei sie die gesamte bei der Systemanalyse gesammelte Information beinhaltet. Das globale Maximum der Zeitfunktion Re(z(t)) wird bei der Laufzeit $t_1$ eingenommen.

Die Methode der inversen Fouriertransformation (IFT) ist auch erfolgreich für den Mehrzielfall verwendbar. An die Wahl der bei der Systemanalyse ermittelten komplexen Amplituden bei diskreten Frequenzen sind aber zusätzliche Bedingungen geknüpft. Nicht jede Menge irregulär abgetasteter Punkte der Übertragungsfunktion führt zu einer einparametrigen Zeitfunktion, welche die Maxima bei den Laufzeiten der d Zielobjekte aufweist.

Für den Mehr-Ziel-Fall wird die IFT durch eine aus der Theorie der Fouriertransformation bekannte Fensterfunktion W(f), wie beispielsweise dem Hanning-Window oder dem Blackman-Window erweitert, es gilt dann:

$$z(t) := \frac{1}{N} \cdot \sum_{k=0}^{N-1} H(f_k) \cdot W(f_k) \cdot \exp(i \cdot 2 \cdot \pi \cdot f_k \cdot t) \tag{6}$$

Die Gewichtsfunktion W(f) erhöht dabei im Mehr-Ziel-Fall die Distanzmessgenauigkeit erheblich.

Nachfolgend wird ein Beispiel für ein für den Mehrfachzielfall geeignetes Frequenzkonzept angegeben.

Ein für den Mehrzielfall optimiertes Frequenzkonzept als Set von Frequenzen bilden äquidistant plazierte Anregungsfrequenzen. Ein solches Konzept kann beispielsweise folgende Frequenzen umfassen: 400MHz, 410MHz, 420MHz, ... 500MHz.

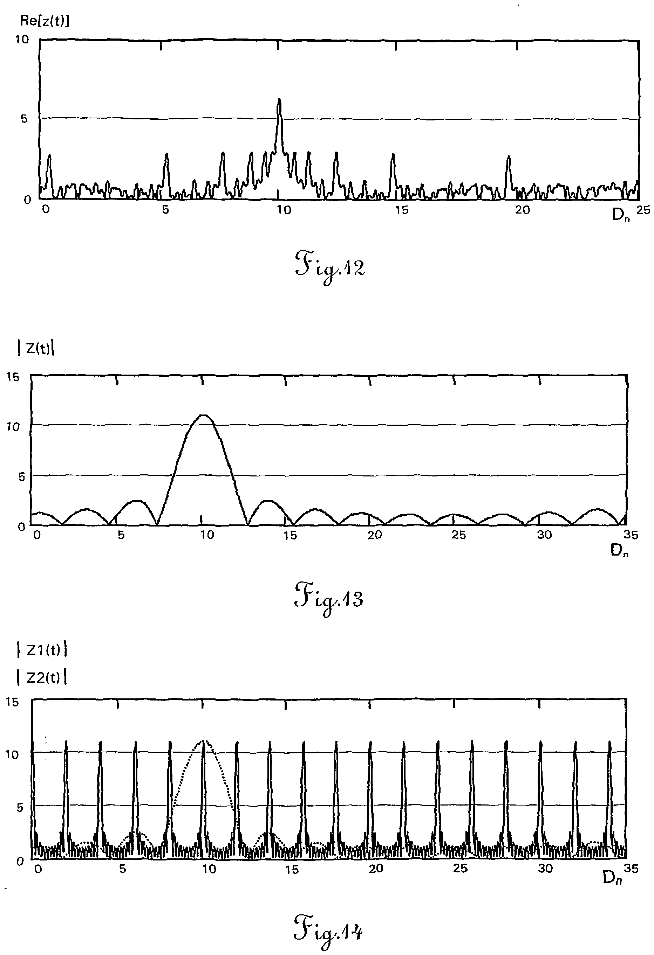

Oft genügt es, den Betrag des durch die IFT erzeugten Zeitsignals z(t) zu berechnen, wobei die typische Form eines solchen aus äquidistant plazierten Anregungsfrequenzen erzeugten Zeitsignals in Fig.13 beispielhaft gegeben ist. Die gesuchte Laufzeit ist im berechneten impulsartigen Zeitsignal |z(t)| enthalten. Treten mehrere Impulse auf so liegt ein Mehrzielfall vor. Das berechnete Zeitsignal ist wegen den diskret vermessenen Frequenzen zeit-periodisch. Die Periodizität des berechneten Zeitsignals limitiert daher die maximale Reichweite. Durch die geeignete Wahl des Sets an äquidistanten Frequenzen kann die maximale Reichweite leicht über 500m erweitert werden ohne an Messgenauigkeit einzubüssen.

Um die Zahl der für die Systemanalyse notwendigen Anregungsfrequenzen niedrig zu halten, erfolgt eine Aufteilung des Frequenzkonzepts auf mehrere äquidistant abgestufte Frequenzen. Mit anderen Worten heisst das, dass in einem ersten Analyseschritt äquidistante Frequenzen mit feinem Frequenzintervall ausgesendet werden. Anschliessend wird mittels IFT das Zeitsignal z(t) oder |z(t)| berechnet und daraus die Grobdistanz bestimmt. Ein Beispiel wird in Fig.14 dargestellt: 100MHz, 100.5MHz, 101MHz, 101.5MHz, ... 105MHz.

In einem zweiten Analyseschritt wird ein anderes Set an äquidistanten Frequenzen mit gröberem Frequenzintervall ausgesendet und anschliessend wiederum mittels IFT das entsprechende Zeitsignal z (t) berechnet. Das Ergebnis ist eine Feinbestimmung der Distanzen. Dies wird exemplarisch in Fig.14 gezeigt: 100MHz, 107.5MHz, 115MHz, .. 175MHz. Ist die Distanzmessgenauigkeit noch ungenügend so kann mit einem noch grober abgestuften äquidistanten Frequenzset die Systemanalyse verfeinert werden.

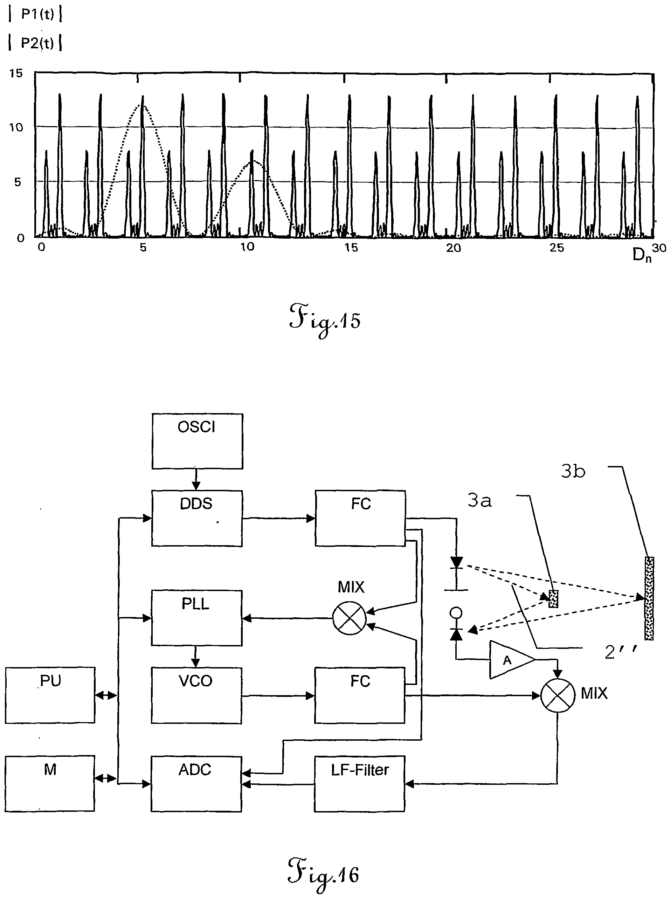

Anstelle des Zeitsignals z(t) als Kostenfunktion kann auch eine durch eine gewichtete IFT erzeugtes Leistungssignal $\overline{z(t)} \cdot z(t)$ zur Distanzberechnung verwendet werden , wie beispielhaft in Fig.15 dargestellt. $\overline{z(t)}$ bedeutet dabei das konjugiert komplexe Zeitsignal z(t).

Das System wird mit periodischen Sendesignalen als Eingangsgrösse angeregt. Im einfachsten Fall ist dies durch eine harmonische Sinusschwingung realisierbar. Vorzugsweise werden aber Impulse kurzer Dauer mit beispielsweise Rechtecks-, Dreiecks-, Diracstoss- oder anderen SignalFormen periodisch erzeugt. Das Frequenzspektrum des Sendesignals ist daher diskret, neben der Grundharmonischen werden abhängig von der Impulsform gleichzeitig die entsprechenden höherharmonischen Frequenzen im Spektrum erzeugt.

Für eine Systemanalyse werden mehrere periodische Sendesignale unterschiedlicher Repetitionsfrequenz verwendet. Diese werden dabei nacheinander an den Systemeingang angelegt und die korrespondierenden Ausgangssignale gemessen. Sind alle periodischen Signale vermessen, so ist die Systemausmessung (Systemanalyse) abgeschlossen. Im Spektralbereich sind neben der Grundharmonischen der periodischen Signalantworten auch deren höherharmonischen Spektralanteile vermessen.

In der erfinderischen Ausführungsform ist eine Erzeugung des Sets von Anregungsfrequenzen beispielsweise mittels einem DDS-Synthesizer (Direct digital synthesizer) realisierbar. Diese kompakten single-chip-Bausteine können fast jede beliebige Frequenz mit höchster Präzision erzeugen. Die Umschaltzeit für den Frequenzwechsel beträgt weniger als eine msec und ist im Vergleich zur benötigten Messzeit für die Systemanalyse vernachlässigbar kurz. Die Umschaltung wird beispielsweise von einem Mikroprozessor über einen Datenbus gesteuert. Dabei kann die Taktfrequenz zur Synchronisation des DDS-Bausteins von einem ppm-genauen Masteroszillator erzeugt werden. Diese Frequenz dient in diesem Fall als die Basis für die Massstabsskalierung aller Anregungsfrequenzen, welche die Distanzauflösung im ppm-Bereich garantiert.

Neben dem DDS-Frequenzsynthesizer sind auch andere moderne "Frequency Hopping Devices" wie der Fractional-N-Synthesizer bekannt. Auch solche Bausteine eignen sich wegen der schnellen und fein abgestuften Frequenzumschaltung als Erzeuger der benötigten Modulationsfrequenzen.

Ein vorteilhaftes Element ist die Erfassung der Signalstärke (Amplitude) der ausgesendeten Anregungsfrequenzen, da zur Berechnung der komplexwertigen Übertragungsfunktion H(f) die Kenntnis beider Amplituden, des Sendesignals und des Empfangssignals, verwendet wird.

Art und Wahl der jeweiligen optimalen periodischen Anregung ist wie bei der Methode zur Distanzberechnung von den systemspezifischen Zustandsmerkmalen, wie z.B. Anzahl der Ziele, Zieldistanzen, Signal-zu-Rausch-Verhältnissen, etc. abhängig. Unter Berücksichtigung dieser aktuellen systemspezifischen Zustandsmerkmale kann mit dem DDS-Synthesizer und gegebenenfalls weiteren Komponenten das Anregungsspektrum zur Systemanalyse sehr flexibel vor Ort optimal selektiert oder konfiguriert werden.

Für den 1-Zielfall werden beispielsweise die Repetitionsfrequenzen der periodischen Sendesignale mit einer logarithmisch-äquidistanten Abstufung gewählt. Die mittels der inversen Fouriertransformation berechnete Kostenfunktion s (t) erzeugt dann ein gegen Rauschen robustes und schätzertreues globales Maximum, wie auch in Fig.12 dargestellt.

Bei Zielmarken, welche Mehrfachreflexionen zwischen Zielpunkt und Distanzmessvorrichtung erzeugen, werden vorzugsweise die Repetitionsfrequenzen der Sendeimpulse mit einer nach den Primzahlen liegenden Abstufung eingesetzt. Die mittels der inversen Fouriertransformation berechnete Kostenfunktion s (t) erzeugt dann ein schätzertreues globales Maximum der gesuchten Distanz zur Zielmarke.

Bei Messsituationen mit mehreren Zielen im Messstrahl werden für die Systemanalyse beispielsweise periodische Sendesignale mit äquidistanter Frequenzabstufung eingesetzt.

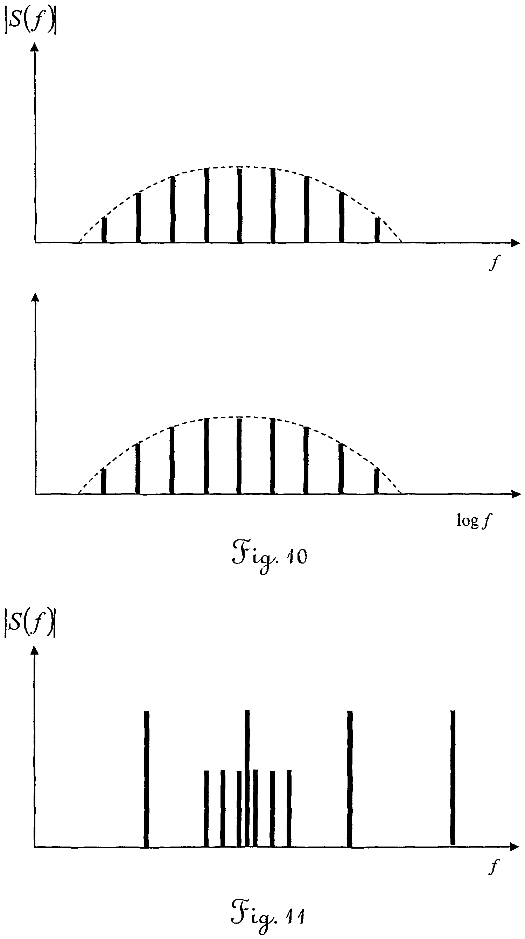

Um hohe Distanzmessgenauigkeit (sub-mm) auch über grosse Distanzbereiche von beispielsweise 500m zu erreichen, sind wie bereits beschrieben mehrere Sets von äquidistant abgestuften Anregungsfrequenzen nutzbar. In der Regel genügen 2 Sets von Anregungssignalen mit unterschiedlichem Intervall zwischen den Repetitionsfrequenzen, wie in Fig.11 abgebildet.

Zusammenfassend sind grundsätzlich 3 Auswertemethoden für eine Systemanalyse zielführend:

1. Eine Methode ist die Auswertung der Systeminformation im Zeitbereich. Durch Messung der relativen Laufzeiten der zeitlich gegeneinander verschoben Signalantworten aller Impulsfolgen kann die Anzahl der Impulse, welche gleichzeitig auf der Uebertragungsstrecke unterwegs sind (Eindeutigkeit), bestimmt werden. Die Distanz zu den gesuchten Zielobjekten ergibt sich schliesslich aus der Messung der Laufzeit zwischen dem aktuell gesendeten und dem gleichzeitig empfangenen Signalimpuls kombiniert mit der Anzahl der Impulse zwischen Sende- und Empfangseinheit.

2. Eine weitere Methode ist die Auswertung im Frequenzbereich. Mittels der Anwendung der DFT/FFT auf die gemessenen periodischen Zeitsignale werden die Parameter der Übertragungsfunktion H(f) bei den Anregungsfrequenzen (inkl. Höherharmonischen) berechnet. Ist die Übertragungsfunktion H(f) bei genügend Frequenzen ausgemessen, so kann die Distanzbestimmung beispielsweise nach der Methode der kleinsten Quadrate, mittels einer Kostenfunktion nach dem Maximum-Likelihood-Prinzip oder auch einer nach anderen Kriterien definierten Kostenfunktion berechnet werden.

3. Eine weitere Methode ist die Weiterführung der Auswertung im Frequenzbereich. Ist die Übertragungsfunktion H(f) bei genügender Anzahl von Frequenzen ausgemessen, so wird ein der Impulsantwort entsprechendes Zeitsignal z(t) mittels Anwendung der IFT rekonstruiert, so dass eine Auswertung wieder im Zeitbereich erfolgt. Die System-Totzeiten beziehungsweise Laufzeiten zu den einzelnen Zielobjekten sind durch die Signalmaxima beziehungsweise Signalminima von Re(z(t)) bestimmt.

Vorrichtungsseitig wird das von den Zielobjekten reflektierte optische Empfangssignal mit einem vorzugsweise elektronisch beitbandigen opto-elektronischen Empfänger erfasst. Bei den Anregungssignalen handelt es sich um hochfrequente Signale im MHz- oder GHz-Bereich. Um eine hochfrequente Signal-Abtastung mit einem AD-Wandler (ADC) zu vermeiden, kann in einer möglichen Ausführungsform beispielsweise das Empfangssignal auch einem elektronischen Mischer zugeführt werden (Heterodyne-Empfänger). Am Ausgang des Mischers wird das auf Niederfrequenz transformierte Zeitsignal mittels eines ADC abgetastet und die Messpunkte werden einer Auswerteeinheit oder einem Speicher zugeführt.

Die abgetasteten Zeitsignale unterschiedlicher Repetitionsrate werden vorzugsweise mittels einer DFT-Transformation in den Frequenzbereich transformiert, wobei als Resultate die komplexwertigen Amplituden der Übertragungsfunktion H(f) bei den jeweiligen Frequenzen folgen. Dabei werden mit jedem periodischen Sende- oder Anregungssignal weitere Messpunkte der komplexen Übertragungsfunktion H(f) ermittelt. Sind genügend Messpunkte der komplexen Übertragungsfunktion H(f) bekannt, kann mit der Distanzberechnung nach einer der Methoden zur Bestimmung der Totzeiten begonnen werden.

Eine erfindungsgemässe Ausführungsform eines SystemAnalysators für den Ein-Ziel-Fall mit erhöhter Reichweite und Unempfindlichkeit gegenüber Regen, Schneefall oder Nebel wird beispielsweise wie folgt realisiert. Die Erzeugung der Anregungsfrequenzen zur Systemanalyse erfolgt durch einen DDS-Synthesizer, wobei eine Bestimmung der Amplituden der Anregungsfrequenzen durchgeführt wird. Die Amplituden der Anregungsfrequenzen können auch einmalig werkseitig kalibriert werden.

Der Signalempfang wird mittels elektronischen Mischers und einem PLL-Signal heterodyn ausgestaltet, wobei die Signalerfassung durch impulssynchrone Digitalisierung mit einem ADC erfolgt. Als Alternative kann anstelle der heterodynen Empfangsmethode auch eine direkte Signalabtastung im Hochfrequenzbereich realisiert werden. Der erste Schritt der Auswertung des digitalisierten Empfangssignals wird mittels der DFT-Transformation in der Prozessor-Einheit durchgeführt. Anschliessend erfolgt die Berechnung eines zur Impulsantwort äquivalenten Zeitsignals mit Hilfe der IFT-Methode.

Anschliessend erfolgt die Berechnung eines zur Impulsantwort äquivalenten Zeitsignals mit Hilfe der IFT-Methode. Regen, Nebel oder Schneefall reflektieren einen Teil des optischen Sendesignals. Da Signalanteile durch Streuung aber integrativ auf dem gesamten Messweg entstehen, wird der Impulsantwort nicht eine frequenzunabhängige Totzeit auferlegt, sondern eine frequenzabhängige Laufzeit (Dispersion). Theoretische Überlegungen und Experimente zeigen, dass der störende dispersive Einfluss auf das Laufzeitverhalten des Systems verschwindet, sobald die Anregungsfrequenzen über 10MHz liegen. Der Einfluss von Regen oder Nebel auf die Signalamplitude zeigt Tiefpassverhalten mit einer Eckfrequenz bei etwa 1 bis 5MHz. Werden also zur Systemanalyse ausschliesslich Modulationsfrequenzen höher als ca. 10MHz verwendet, so ist der Einfluss von Niederschlagspartikeln in der Luft auf die Distanzberechnung zu den eigentlichen Zielobjekten vernachlässigbar.

Die aufgrund der DDS-Technologie grosse Anzahl von Modulationsfrequenzen bewirkt als einen weiteren Vorteil die Informationsredundanz. Wird beispielsweise während der Systemanalyse der optische Messtrahl durch eine Person versehentlich unterbrochen, so erzeugt die Störung eine Unstetigkeit in der Übertragungsfunktion H(f), welche wegen der grossen Zahl von Modulationsfrequenzen leicht erkannt und bei der weiteren Signalauswertung unberücksichtigt gelassen werden kann. Für die Distanzberechnung genügen dann die restlichen Spektralpunkte von H(f) ohne merkbare Einbusse an Genauigkeit.

Eine andere erfindungsgemässe Ausführungsform eines SystemAnalysators für den Mehr-Ziel-Fall wird beispielsweise nach folgendem Schema realisiert.

Die Erzeugung der, vorzugsweise flexiblen, Anzahl von Anregungsfrequenzen zur Systemanalyse erfolgt durch einen ersten DDS-Synthesizer kombiniert mit einem nachgeschalteten Frequenzumwandler zur Erzeugung sehr hoher Frequenzen. Letztere garantieren eine hohe Distanzmessgenauigkeit. Die Anordnung ohne PLL ermöglicht eine schnelle Frequenzumschaltung im μsec-Bereich. Parallel werden senderseitig die Amplituden der Anregungsfrequenzen bestimmt, wobei die Amplituden auch einmalig werksseitig kalibriert werden können. Im Empfängerschaltkreis erzeugt ein zweiter ebenso schnell umschaltbarer DDS-Synthesizer die Mischersignale für den Heterodyn- oder Homodyn-Empfang. Ein schrittweises Durchstimmen der Frequenzen erfolgt somit über einen erweiterten Frequenzbereich als mit einem einzigen DDS zugänglich wäre. Zur Signalerfassung kommt eine Digitalisierung mit einem ADC zur Anwendung. Die Signalauswertung mittels der DFT/IFT-Methode erfolgt in der Prozessor-Einheit unter Berechnung eines zur Impulsantwort äquivalenten Zeitsignals.

Das erfindungsgemässe Verfahren sowie geeignete Vorrichtungen zur Durchführung des Verfahrens werden nachfolgend anhand von in der Zeichnung schematisch dargestellten Ausführungsbeispielen rein beispielhaft näher beschrieben. Im einzelnen zeigen

Fig.1a-b     die Prinzipdarstellung eines Impulsmessverfahrens nach dem Stand der Technik;

Fig.2a-b     die Prinzipdarstellung eines Phasenmessverfahrens nach dem Stand der Technik;

Fig.3     ein Blockschaltbild für einen Phasenmesser nach dem Stand der Technik;

Fig.4    die allgemeine Prinzipdarstellung des erfindungsgemässen Systemanalyse-Messverfahrens mit mehreren Zielobjekten;

Fig.5a-b    die Prinzipdarstellung eines Beispiels des erfindungsgemässen Systemanalyse-Messverfahrens;

Fig.6a-b    beispielhafte Eingangs- und Ausgangsgrössen für ein Systemmodell des erfindungsgemässen Verfahrens;

Fig.7    ein Systemmodell des erfindungsgemässen Verfahrens mit einer Kombination diverser Teilsysteme;

Fig.8    Beispiele von geeigneten Sendesignalen für die Systemanalyse;

Fig.9    Beispiele von geeigneten spektralen Verteilungen der gesamten Menge aller Sendesignale;

Fig.10    bandpassbegrenzte diskrete Frequenzen als weitere Beispiele von spektralen Verteilungen der gesamten Menge aller Sendesignale;

Fig.11    zwei Sets von diskreten Frequenzen mit jeweils unterschiedlicher äquidistanter Plazierung als ein weiteres Beispiel der spektralen Verteilung der gesamten Menge aller Sendesignale;

Fig.12    ein exemplarisches Zeitsignal als Realteil der IFT einer spektral logarithmisch-äquidistanten Systemanalyse;

Fig.13    ein exemplarisches Zeitsignal als Betrag der IFT (Envelope) einer spektral äquidistanten Systemanalyse;

Fig.14    zwei exemplarische Zeitsignale als Betrag der IFT von zwei spektral äquidistanten Frequenz-Sets;

Fig.15    exemplarische Leistungssignale als IFT von zwei spektral äquidistanten Frequenz-Sets mit zwei unterschiedlich reflektierenden Zielobjekten;

Fig.16    ein Blockschaltbild für eine erfindungsgemässe Vorrichtung mit heterodynem Mischer;

Fig.17    ein Blockschaltbild für eine erfindungsgemässe Vorrichtung mit heterodynem Mischer und erhöhter Flexibilität bei der Frequenzwahl;

Fig.18    die schematische Darstellung eines TheodolitenFernrohrs mit erfindungsgemässer Vorrichtung als ein Beispiel für ein erfindungsgemässes geodätisches Messinstrument;

Fig.19    die schematische Darstellung eines TheodolitenFernrohrs mit erfindungsgemässer Vorrichtung und der zusätzlichen Verwendung zur Steuerung eines Autofokus;

Fig.20    die schematische Darstellung eines TheodolitenFernrohrs mit erfindungsgemässer Vorrichtung und umschaltfreiem internen Lichtweg zur zeitgleichen Kalibrierung;

Fig.21    die schematische Darstellung eines erfindungsgemässen Scanners mit erfindungsgemässer Vorrichtung; und

Fig.22    die schematische Darstellung eines biaxialen Distanzmessers mit erfindungsgemässer Vorrichtung und umschaltfreiem internen Lichtweg zur zeitgleichen Kalibrierung.

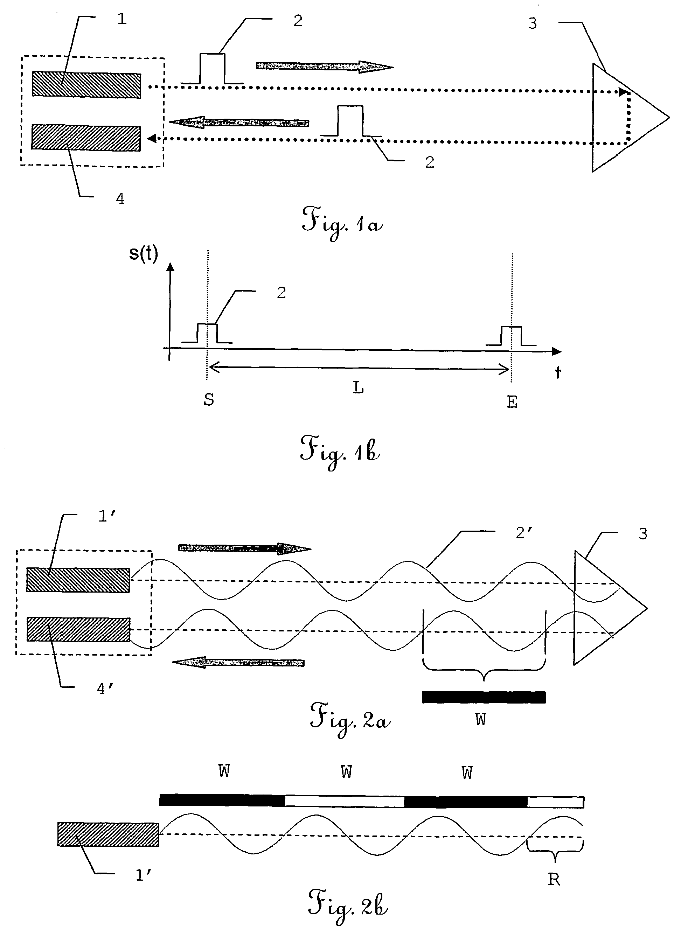

Fig.1a-b zeigen die Prinzipdarstellung eines Impulsmessverfahrens nach dem Stand der Technik.

In Fig.1a wird durch einen Sender 1 ein Lichtpuls 2 ausgesandt, der nach der Reflektion an einem Ziel, z.B. einem Retroreflektor 3, wieder vom Empfänger 4 detektiert wird. Meist werden Sender 1 und Empfänger 4 in einem Gerät angeordnet.

Die Entfernung wird aus der Laufzeit L als zeitliche Differenz zwischen dem Startzeitpunkt S des Aussendens eines Lichtpulses 2 und dem Empfangszeitpunkt E ermittelt. Die Ermittlung des Empfangszeitpunktes erfolgt dabei durch die Auswertung eines Merkmals des Signalimpulses s(t), z.B. durch das Überschreiten einer Signalschwelle oder durch Schwerpunktbestimmung des integrierten Pulsverlaufs.

Fig.2a-b zeigen die Prinzipdarstellung eines Phasenmessverfahrens nach dem Stand der Technik bei dem die Entfernung zwischen einem Gerät und einem Ziel bestimmt wird.

In Fig.2a wird von einem Sender 1' eine moduliertes Lichtsignal als Lichtwelle 2 auf ein Ziel ausgesendet, das wiederum aus einem Retroreflektor 3 bestehen kann, und von dort zu einem Empfänger 4' zurück reflektiert. Im Gegensatz zum Laufzeitverfahren wird nun keine zeitliche Differenz zwischen Aussendung und Empfang registriert. Aufgenommen wird die Verschiebung der Phase des ein- und ausgehenden Signals. Diese Verschiebung ist abhängig von der Entfernung zwischen Gerät und Ziel, da diese Entfernung einem Vielfachen der Wellenlänge W der ausgesendeten Lichtwelle 2' sowie einem verbleibendem Residuum R entspricht. Dieses Residuum stellt den bei einer Teilung der Entfernung durch die Wellenlänge W verbleibenden nicht-ganzzahligen Anteil dar, wie in Fig.2b dargestellt. Die gemessene Phasenverschiebung ist ein Mass für das Residuum R, so dass bei Kenntnis dieses Residuums R und der Anzahl der Wellenlängen W die Entfernung zwischen Messgerät und Ziel abgeleitet werden kann. Da bei diesem Verfahren die Anzahl der Wellenlängen W als ganzzahliger Anteil nicht direkt bestimmt wird, muss eine zusätzliche Auflösung dieser Ambiguität erfolgen. Dies kann beispielsweise durch die Verwendung mehrerer (typischerweise 2 bis 5) Modulationsfrequenzen erfolgen, für die sequentiell die absolute Phase des Empfangssignals relativ zum Sendesignal verrechnet wird. Aus der Mehrzahl dieser Messungen kann dann die Entfernung zum einen Zielobjekt abgeleitet werden.

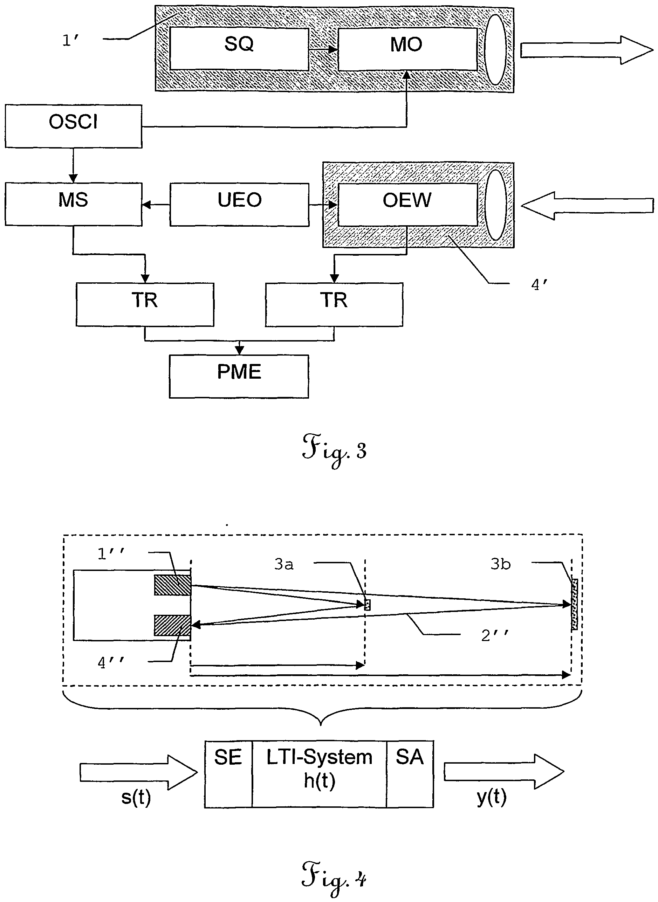

Eine für einen Phasenmesser des Stands der Technik geeignete Realisierung wird in Fig.3 durch ein Blockschaltbild schematisch dargestellt. Im Sender 1' wird dem Licht einer Strahlungsquelle SQ durch einen von einem Hochfrequenz-Oszillator OSCI gesteuerten Modulator MO ein Signal aufmoduliert. Das reflektierte Licht wird nach der Erfassung durch die Optik des Empfängers 4' in einem opto-elektronischen Wandler OEW in ein niederfrequentes Signal gewandelt. Zu diesem Zweck liegt am opto-elektronischen Wandler OEW das Signal eines Überlagerungsoszillators UEO an. Durch den gleichen Überlagerungsoszillators UEO wird eine Mischstufe MS versorgt, die aus dem Signal des Hochfrequenz-Oszillators ein niederfrequentes ReferenzSignal erzeugt. Die niederfrequenten Signale werden durch Trigger TR in Rechteckimpulse umgewandelt. In einer nachfolgend angeordneten Phasenmesseinheit PME werden die heruntergemischten, niederfrequenten Signale des Hochfrequenz-Oszillator OSCI und des empfangenen Lichts verglichen und die Phasendifferenz ermittelt. Die Phasendifferenz ist ein Mass für die Entfernung.

Fig.4 zeigt die allgemeine Prinzipdarstellung des erfindungsgemässen Systemanalyse-Messverfahrens mit mehreren Zielobjekten unter Verwendung eines Systemmodells des Distanzmessers als lineares Übertragungssystem. Von einem Sender 1" wird ein Lichtsignal 2" ausgesendet. Dieses Lichtsignal 2" erfährt an mehreren Zielen, die hier exemplarisch durch ein erstes Ziel 3a und ein zweites Ziel 3b verkörpert werden, eine Reflektion und wird vom Empfänger 4" detektiert. Das Gesamtsystem aus Sender 1", Zielen 3a, 3b und dem Empfänger 4" wird dabei näherungsweise als zeitinvariantes System (LTI-System) betrachtet. Dies bedeutet aber nicht, dass die Zielobjekte sich nicht verschieben dürfen, innerhalb der Messzeit zur Systemanalyse müssen die Bewegungen jedoch angemessen klein bleiben. Zur Ableitung einer Entfernungsinformation wird an einen Systemeingang SE ein Signal s(t) angelegt und die Signalamplitude y(t) der das System beschreibenden Systemantwort an einem Systemausgang SA aufgenommen. Systemein- und -ausgang stellen hierbei die Schnittstellen des LTI-Systems zur Aussenwelt dar.

In Fig.5a. erfolgt die Prinzipdarstellung eines Ausführungsbeispiels des erfindungsgemässen Systemanalyse-Messverfahrens im Zeitbereich. Das LTI-System wird mehrfach durch ein impulsartiges, periodisches Signal angeregt, das jeweils aus mehreren diskreten Frequenzen besteht. Für jede Anregungsimpulsfolge s(t) wird die vom Empfänger registrierte Signalamplitude oder Signalform y(t) der Systemantwort 5 aufgenommen. Beim Wechsel der Pulsrepetitionsfrequenz von $f_j$ zu $f_k$ resultiert eine relative zeitliche Verschiebung der Signalantwort um $\Delta t_{jk}$. Diese Verschiebungszeiten $\Delta t_{jk}$ geben Aufschluss über die Anzahl der Impulse, welche gleichzeitig auf der Übertragungsstrecke unterwegs sind, und ergeben somit eine Grobschätzung der gesuchten Distanzen. Eine präzise Feinschätzung der Distanzen wird schliesslich durch die Bestimmung der Laufzeitunterschiede zwischen den momentan ausgesandten und momentan empfangenen Signalimpulsen erhalten. Zu diesem Zweck kann ein Zeitsignal z(t) 6 konstruiert werden, welches aus der Summe von allen zeitlich verschobenen Signalantworten $h_k(t-\Delta t_{jk})$ gebildet wird. Aus z(t) werden dann stochastisch gemittelt die Laufzeiten $t_n$ bestimmt.

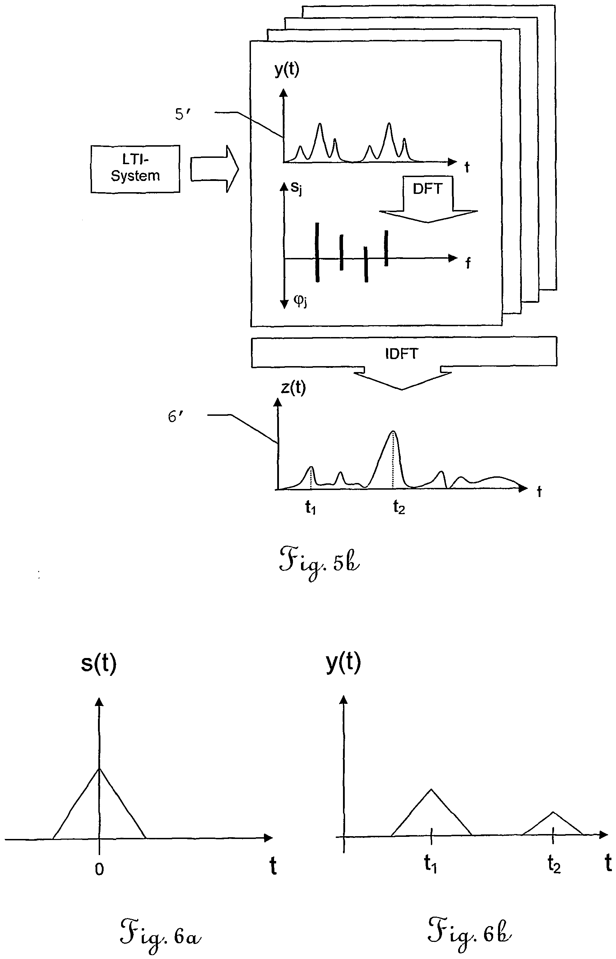

In Fig.5b. erfolgt die Prinzipdarstellung eines weiteren Ausführungsbeispiels des erfindungsgemässen Systemanalyse-Messverfahrens. Das LTI-System wird mehrfach durch ein Signal angeregt, das jeweils aus mehreren diskreten Frequenzen besteht. Für jede Anregung wird die vom Empfänger registrierte Signalamplitude oder Signalform y(t) der Systemantwort 5' aufgenommen und einer diskreten Fourier-Transformation (DFT) unterworfen. Aus der DFT folgt die komplexwertige Übertragungsfunktion bei den jeweiligen angeregten Frequenzen $f_j$ des Sendesignals. Aus Real- und Imaginärteil können optional die für die verschiedenen Frequenzen des Spektrums jeweils Amplitude $S_j$ und Phasenverschiebung $\varphi_j$ berechnet werden. Aus dem Aggregat der Spektren aller Systemantworten der verschiedenen Anregungen wird durch eine inverse diskrete Fourier-Transformation (IDFT) wiederum ein rekonstruiertes Zeitsignal z(t) 6' abgeleitet. Das Zeitsignal z(t) 6' ist äquivalent zu einem Distanzsignal z(D) bei dem der Zeitparameter t mit der halben Lichtgeschwindigkeit c multipliziert wird. Aus dem Verlauf dieses rekonstruierten Zeitsignals 6' können in diesem Beispiel die Laufzeiten $t_1$ und $t_2$ ermittelt werden, welche eine Identifikation von zwei Zielen und die Bestimmung deren Entfernung erlauben.

In Fig.6a-b werden beispielhafte Eingangs- und Ausgangsgrössen für ein Systemmodell des erfindungsgemässen Verfahrens dargestellt. Fig.6a zeigt einen Dreiecksimpuls, der mit periodischer Wiederholung im MHz-Bereich zur Anregung des LTI-Systems an den Systemeingang angelegt wird, wobei das Maximum der Signalamplitude s (t) der Zeit t=$_0$ entspricht. In Fig.6b ist schematisch die vom Empfänger aufgenommene und am Systemausgang bereitgestellte Systemantwort y(t) dargestellt. Im hier angenommenen Zwei-Zielfall besteht diese Antwort aus zwei dreiecksförmigen Verläufen der empfangenen Signalamplitude y(t), deren Scheitelpunkte zu den Zeitpunkten $t_1$ und $t_2$ empfangen werden.

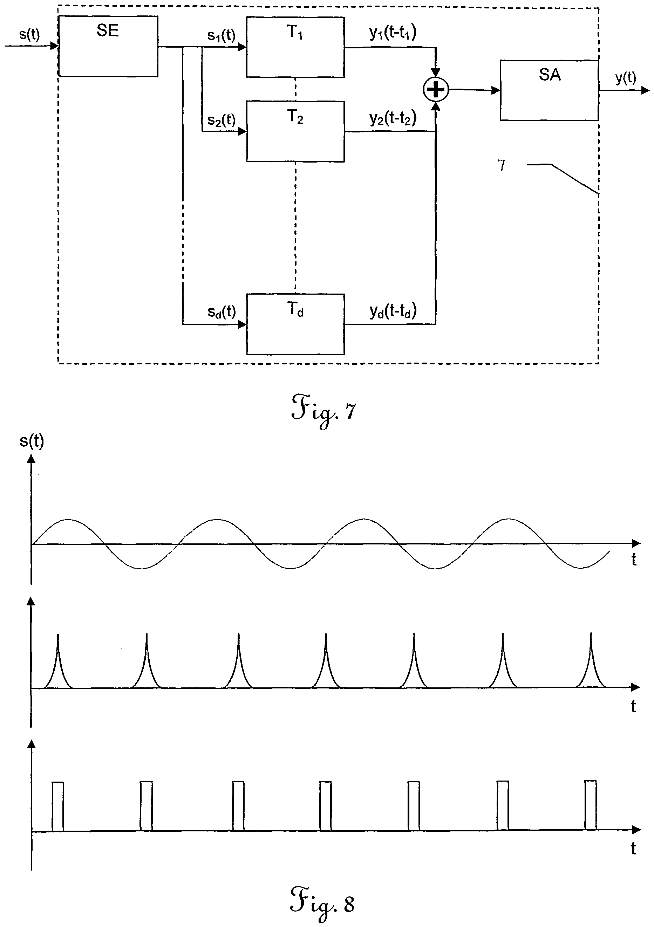

Fig.7 stellt ein Systemmodell des erfindungsgemässen Verfahrens als eine Kombination von d Teilsystemen zu einem LTI-System 7 dar dar, wobei jedes der d Teilsysteme ein Zielobjekt repräsentiert. Für lineare Systeme gelten das Überlagerungs- und das Verstärkungsprinzip sowie das Prinzip der Vertauschbarkeit eines Systems mit der Lauf- oder Totzeit $t_n$. Ein System kann daher mit einer Totzeit in der Reihenfolge vertauscht werden, ohne dass sich der Ausgang ändert, so dass die Teilsysteme des LTI-Systems 7 daher auch in anderer Reihenfolge und anderer Aufgliederung gezeichnet werden können. Das am Systemausgang SA anliegende Signal y(t) stellt damit eine lineare und vertauschbare Überlagerung der Systemantworten $y_1(t-t_1)$ bis $y_d(t-t_d)$ aller d Teilsysteme auf die aus der Anlegung eines Signals s(t) am Systemeingang SE resultierende jeweilige Anregung $s_1(t)$ bis $s_d(t)$ dar. Das Systemmodell in Fig.7 entspricht Gleichung 2.

Fig.8 stellt geeigneten Sendesignalen für die Systemanalyse dar, die beispielsweise als sinusförmige Schwingung (oben) sowie als Folge von Nadel- oder Dirac-Impulsen (Mitte) oder Rechteckimpulsen (unten) ausgebildet sein können.

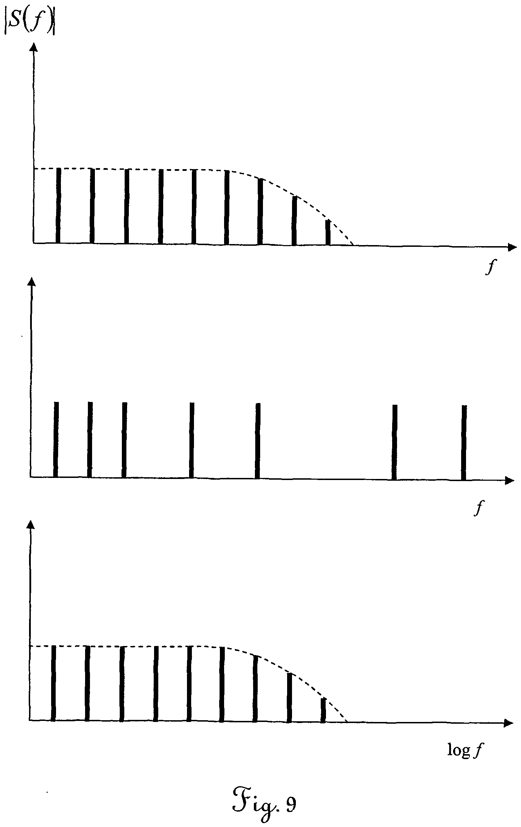

In Fig.9 werden Beispiele von geeigneten spektralen Verteilungen der gesamten Menge aller Sendesignale dargestellt. Die geeignete spektrale Verteilung der gesamten Menge aller Sendesignale (Summe aller Anregungssignal-Spektren) ist für eine Systemanalyse relevant. Mit einem (einzigen periodischen) Sendesignal werden in der Regel mehrere Frequenzen erzeugt (Fourierreihe). Erfindungsgemäss werden dabei alle simultan ausgesendeten Frequenzen gemessen, erfasst und ausgewertet.

Für eine vollständige Systemanalyse werden oft nacheinander mehrere Sendesignale unterschiedlicher Periodenlängen ausgesendet, wobei die Belegung als Summe aller Frequenzen im Spektralbereich von Bedeutung ist. Diese Belegung der Spektren, bestehend aus allen gesendeten/empfangenen Frequenzen, kann unterschiedlich sein. Die Frequenzen können beispielsweise äquidistant oder logarithmischäquidistant plaziert sein. Weitere Möglichkeiten bestehen in einem Frequenzabstand, der nach Primzahlen oder nach Fibonacci-Zahlen gewählt wird. In Fig.9 entspricht die oberste Frequenzverteilung einer äquidistanten Plazierung, die in der Mitte dargestellte Wahl der Frequenzabstände erfolgt nach dem Schema der Primzahlen, wohingegen die unterste Verteilung eine logarithmisch-äquidistante Plazierung aufweist. Bei der oberen und unteren Verteilung ist die Menge aller Messsignale explizit empfängerseitig spektral begrenzt dargestellt (Tiefpass), so dass die Modellannahmen und das Abtasttheorem erfüllt werden.

Fit.10 zeigt bandbegrenzte diskrete Frequenzen als weitere Beispiele von spektralen Verteilungen der gesamten Menge aller Sendesignale. Hierbei erfolgt eine spektrale Verteilung aller Anregungssignale mit äquidistanter (oben) oder logarithmisch-äquidistanter (unten) Plazierung.

Fig.11 zeigt ein weiteres Beispiel einer geeigneten spektralen Verteilung der gesamten Menge aller Sendesignale in Form zweier Sets von diskreten Frequenzen mit jeweils unterschiedlicher, äquidistanter Plazierung. Die Intervalle der beiden Sets sind vorzugsweise verschieden.

In Fig.12 wird exemplarisch ein rekonstruiertes Zeit- oder Distanzsignal als IFT einer spektral logarithmisch-äquidistanten Systemanalyse dargestellt. Das Zeitsignal z(t) wird als Kostenfunktion aus einer Systemanalyse mit logarithmisch-äquidistanten Anregungsfrequenzen berechnet. Eine optimale Schätzung der Laufzeit(en) ergibt sich durch eine Datenauswertung, bei welcher die Informationen aller parallel und seriell durchgeführten Teilmessungen miteinbezogen werden. Ein optimaler Schätzer im Sinne der Maximum-Likelihood-Methode ist für den 1-Zielfall die Berechnung eines Zeitsignals mittels IFT aus der Übertragungsfunktion H(f). Die gesuchte Laufzeit $t_n$ bzw. Zieldistanz $D_n$ entspricht dem höchsten Signalpeak. Das dargestellte Zeitsignal ist die IFT der Übertragungsfunktion $H(f_k)$ bei den Frequenzpunkten $f_k$.

Fig.13 zeigt exemplarisch die Einhüllende (Envelope) eines Zeitsignals als IFT einer spektral äquidistanten Systemanalyse. Die Bestimmung der Zieldistanz $D_n$ erfolgt über ein rekonstruiertes Zeitsignal $|z(t)|$, das als Kostenfunktion aus einer Systemanalyse mit äquidistanten Anregungsfrequenzen berechnet wird. Das Zeitsignal wird erzeugt durch die IFT der komplexen Übertragungsfunktion $H(f_k)$ mit den vermessenen Frequenzpunkten $f_k$. Die gesuchte Laufzeit entsprecht wiederum dem höchsten Signalpeak. Zeit und Distanz sind wegen $D = \dfrac{c}{2 \cdot t}$ zueinander äquivalent.

Fig.14 zeigt zwei exemplarische Zeitsignale als IFT von zwei spektral äquidistanten Frequenz-Sets. Die Ableitung der Distanz $D_n$ erfolgt durch Berechnung eines Zeitsignals z(t) als Kostenfunktion aus einer Systemanalyse mit 2 unterschiedlich äquidistant abgestuften Sets an Anregungsfrequenzen. Das erste Zeitsignal z1(t) (gepunktete Linie) wird durch die IFT der komplexen Übertragungsfunktion ermittelt, die aus den Messdaten des ersten Frequenzsets erzeugt wird. Das zweite Zeitsignal z2(t) (durchgezogene Linie) wird durch die IFT der komplexen Übertragungsfunktion erzeugt, ermittelt bei den Frequenzen des zweiten Sets. Eine Grobschätzung der gesuchten Laufzeiten entspricht den höchsten Signalpeaks aus dem ersten Zeitsignal. Eine Feinschätzung der gesuchten Laufzeiten entspricht den höchsten Signalpeaks aus dem zweiten Zeitsignal, in dem die Maxima mit dem ersten Zeitsignal zusammenfallen.

Fig.15 zeigt beispielhaft Leistungssignale als IFT von zwei spektral äquidistanten Frequenz-Sets mit zwei unterschiedlich reflektierenden Zielobjekten. Dargestellt wird eine für den Mehrzielfall bevorzugte Kostenfunktion $|P(t)|$. Die Kostenfunktion entspricht der Umhüllenden des zeitlichen Leistungssignals $P(t)$ von $z(t)$, wobei eine Situation mit zwei Zielobjekten erfasst wird. Das erste Leistungssignal $P1(t)$ (gepunktete Linie) wird erzeugt durch die IFT der komplexen Übertragungsfunktion, welche aus den Messdaten eines ersten Frequenzsets folgt. Das zweite Leistungssignal $P2(t)$ (durchgezogene Linie) wird erzeugt durch die IFT der komplexen Übertragungsfunktion, ermittelt bei den Frequenzen eines zweiten Sets. Eine Grobschätzung der gesuchten Laufzeiten entspricht den höchsten Signalpeaks aus dem ersten Leistungssignal $|P1(t)|$. Eine Feinschätzung der gesuchten Laufzeiten entspricht den höchsten Signalpeaks aus dem zweiten Leistungssignal $|P2(t)|$, in denen die Maxima mit dem ersten Leistungssignal zusammenfallen.

Ein Ausführungsbeispiel eines einfachen optoelektronischen Systemanalysators mit heterodynem Mischer als eine erfindungsgemässe Vorrichtung wird in Fig.16 in Form eines Blockschaltbildes erläutert. Verwendet wird ein Frequenzsynthesizer nach der DDS-Technologie (Direct digital synthesizer). Mit einem solchen Baustein lassen sich alle beliebigen harmonischen Frequenzen und auch beliebige Signalformen programmieren. Über einen Microprozessor kann dabei die Frequenz am Synthesizer innerhalb von Mikrosekunden umgeschaltet werden. Damit lassen sich in kurzer Zeit die gesamten für die Systemanalyse notwendigen Frequenzen durchscannen und Real- und Imaginärteil der Übertragungsfunktion vermessen. Der Phase-Locked-Loop PLL dient zusammen mit einem spannungskontrollierten Oszillator VCO zur Erzeugung einer phasenstabilen Mischerfrequenz für den heterodynen Empfänger. Im Falle einer Direktabtastung der Systemantwort oder bei homodynem Signalempfang kann der PLL entfallen. Die synthetisierten Signale werden mit einem Frequenzkonverter FC zu sehr hohen Frequenzen gewandelt. Das Empfangssignal wird, nach einer Verstärkerschaltung A, mittels einem Produktemischer MIX in ein niederfrequentes Zeitsignal gewandelt, anschliessend einem Niederfrequenz-Filter LF zugeführt und in einem Analog-Digital-Wandler ADC digitalisiert. Die Signaldaten werden von einer Prozessoreinheit PU abgeholt und gegebenenfalls in einem Speicher M abgelegt. Als Zeitnormal für die Distanzmessung dient ein frequenzstabiler Master-Oszillator OSCI.

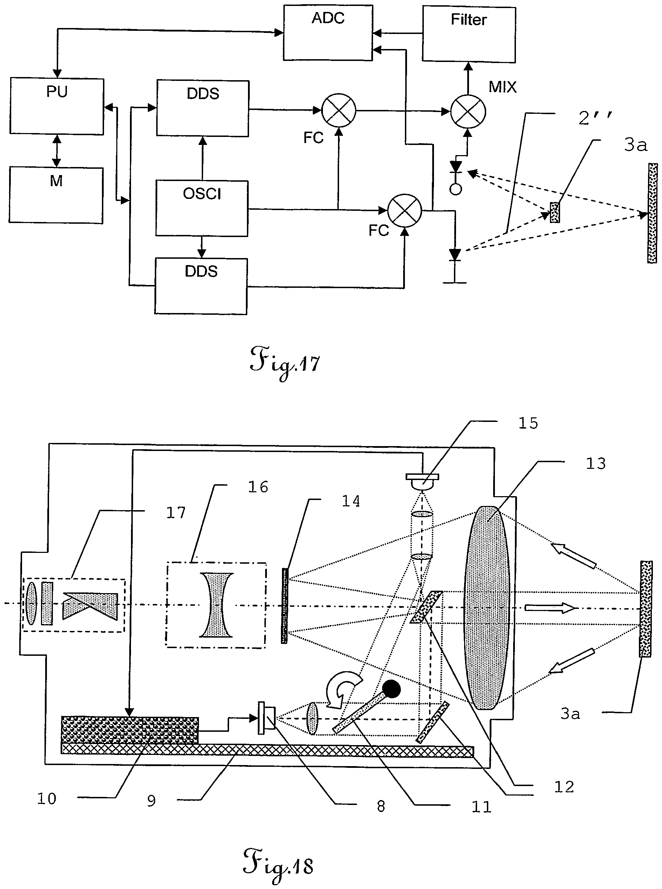

Fig.17 zeigt ein Blockschaltbild für ein weiteres Ausführungsbeispiel einer erfindungsgemässen Vorrichtung mit heterodynem Mischer und erhöhter Flexibilität bei der Frequenzwahl. Die Erzeugung der Anregungsfrequenzen zur Systemanalyse erfolgt durch einen ersten DDS-Synthesizer verbunden mit einem Frequenzumwandler zur Erzeugung sehr hoher Frequenzen. Da die Anordnung keinen Phase-Locked-Loop PLL enthält, ergeben sich diverse Vorteile, beispielsweise ist eine schnelle Frequenzumschaltung im μsec-Bereich möglich, oder der Frequenzbereich des DDS kann komplett ausgeschöpft werden, da der enge Lock-Bereich des PLL wegfällt. Ein zweiter ebenso schnell umschaltbarer DDS-Synthesizer erzeugt die Mischersignale für den Heterodyne-Empfang. Die Frequenzkonverter FC transformieren die Anregungs- und Mischersignale in das gewünschte Frequenzband. Als Zeitnormal dient ein frequenzstabiler Master-Oszillator OSCI. Weitere Bausteine sind ein Heterodyne-Mischer MIX, ein Analog-Digital-Konverter ADC zur Signalabtastung, ein Speicher M zur Datenablage und eine Prozessoreinheit PU als Steuer- und Auswerteeinheit.

In Fig.18 erfolgt die schematische Darstellung des Fernrohrs eines Theodoliten als ein Beispiel für ein erfindungsgemässes geodätisches Messinstrument mit erfindungsgemässer Vorrichtung. Von einer Strahlungsquelle 8, die zusammen mit einer Auswerteelektronik 10 auf einem gemeinsamen Trägerelement 9 angeordnet ist, wird Licht über umschaltbares Umlenkelement 11, reflektierende Umlenkmittel 12 und ein Objektiv 13 auf ein erstes Ziel 3a ausgesandt. Dieses erste Ziel 3a wird stellvertretend für die Gesamtheit der möglichen Ziele abgebildet und beinhaltet keine Eingrenzung auf den Ein-Ziel-Fall. Nach der Reflektion durch das erste Ziel 3a wird das Licht vom Objektiv 13 erfasst und zur Signalverarbeitung über ein dichroitisches Spiegelelement 14 sowie ein reflektierendes Umlenkmittel 12 auf den Empfänger 15 geführt. Das Signal des Empfängers 15 wird durch die Auswerteelektronik 10 verarbeitet und die Entfernungsinformation abgeleitet. Durch das umschaltbare Umlenkelement 11 wird ein Teil des von der Strahlungsquelle 8 emittierten Lichtes direkt auf den Empfänger 15 geleitet, so dass eine geräteinterne Referenzstrecke realisiert wird, die auch zur Systemkalibration geeignet ist. Das Objektiv 13 wird als Sende- und Empfangsobjektiv genutzt, wobei Sender und Empfänger aber auch mit zwei getrennten Objektiven biaxial angeordnet sein können.

Neben den Mitteln zur Signalverarbeitung weist das Theodolitenfernrohr noch eine visuelle Optik auf, die das vom ersten Ziel 3a zurückreflektierte Licht für den menschlichen Beobachter nutzbar macht. Hierfür werden ein Fokussierglied 16 und ein Okularglied 17 verwendet, die wiederum verschiedene Komponenten, wie z.B. ein Umkehrprisma, aufweisen können.

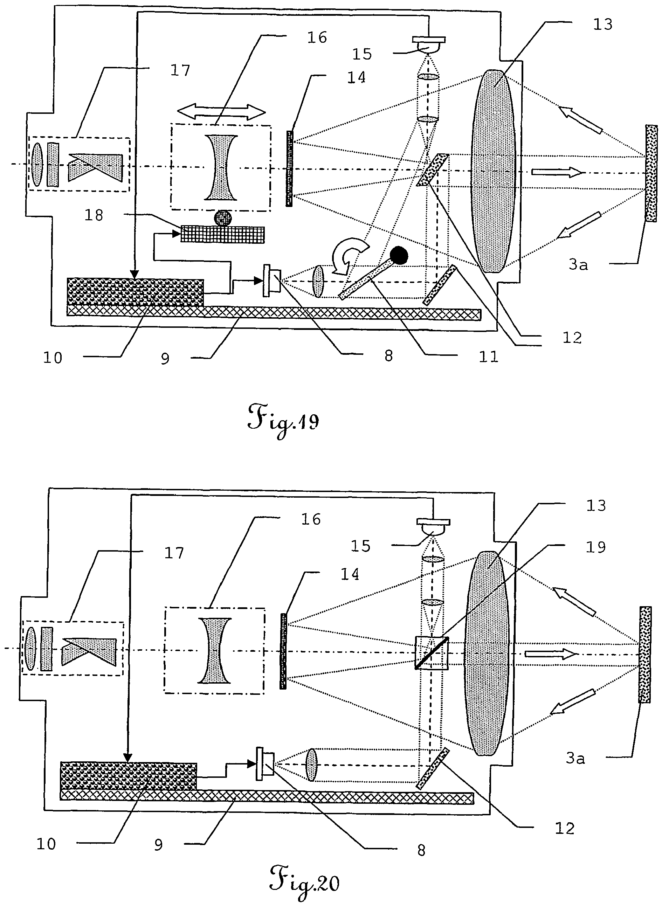

Fig.19 zeigt die schematische Darstellung eines Theodolitenfernrohrs mit erfindungsgemässer Vorrichtung und der zusätzlichen Verwendung zur Steuerung eines Autofokus. Bei grundsätzlich zu Fig.18 ähnlichem Aufbau weist diese Ausführungsform ein Stellelement 18 auf, das durch die Auswerteelektronik 10 gesteuert wird und zur automatischen Einstellung des Fokussiergliedes 16 dient.

Eine weitere Ausführungsform eines Theodolitenfernrohrs mit erfindungsgemässer Vorrichtung und einer alternativen Realisierung der Strahlführung wird in Fig.20 schematisch dargestellt. Von einer Strahlungsquelle 8, die wiederum zusammen mit einer Auswerteelektronik 10 auf einem gemeinsamen Trägerelement 9 angeordnet ist, wird Licht auf ein reflektierendes Umlenkmittel 12 emittiert. Dieses reflektierende Umlenkmittel 12 lenkt Teile des Lichts über einen Strahlteiler 19 sowohl direkt auf den Empfänger 15 als auch auf das Objektiv 13 und damit das wenigstens eine Ziel 3a. Nach der Reflektion wird das Licht wieder vom Objektiv 13 erfasst und zur Signalverarbeitung über ein dichroitisches Spiegelelement 14 sowie den Strahlteiler 19 auf den Empfänger 15 geführt. Das Signal des Empfängers 15 wird durch die Auswerteelektronik 10 verarbeitet und die Entfernungsinformation abgeleitet. Durch den Strahlteiler 19 wird eine geräteinterne Referenzstrecke definiert. Die Systemkalibration erfolgt in diesem Fall simultan zur Distanzmessung auf das externe Zielobjekt.

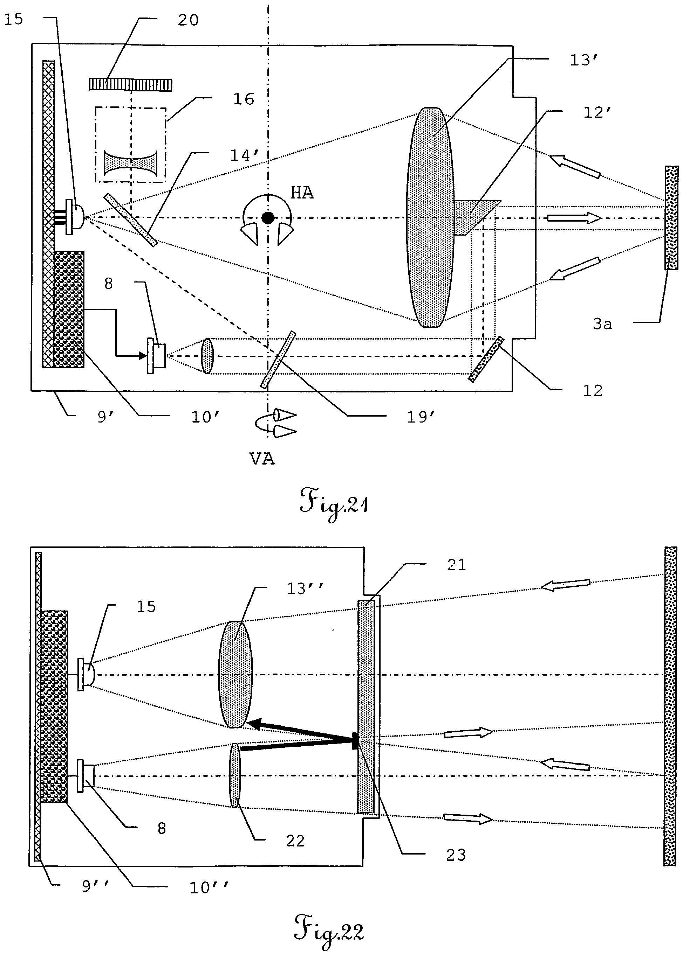

Fig.21 zeigt beispielhaft eine schematische Darstellung eines erfindungsgemässen Scanners mit erfindungsgemässer Vorrichtung. Zur Aufnahme von dreidimensionalen Bildern wird von einer Strahlungsquelle 8, die zusammen mit einer Auswerteelektronik 10' in dem Gehäuse mit einem gemeinsamen Trägerelement 9' angeordnet ist, Licht über ein strahlteilendes Umlenkelement 19', ein reflektierendes Umlenkmittel 12 und ein Umlenkelement 12', das dem Objektiv 13' zugeordnet ist, auf eine aufzunehmende Szenerie gesendet, deren unterschiedliche Oberflächenstrukturen in dieser Darstellung durch ein erstes Ziel 3a repräsentiert werden.

Nach der Reflektion wird das Licht vom Objektiv 13' erfasst und über ein dichroitisches Spiegelelement 14' auf den Empfänger 15 geführt. Über das Spiegelelement 14' werden vor allem die Messumgebung, aber auch ein Teil des Sendesignals auf einen Bildsensor 20 geführt. Das Signal des Empfängers 15 wird durch die Auswerteelektronik 10' verarbeitet und die Entfernungsinformation abgeleitet. Zwischen dichroitischem Spiegelelement 14' und dem Bildsensor ist ein Fokussierglied 16 angeordnet, das auch in zur Fig.19 analoger Weise mit einem Stellelement versehen und automatisch eingestellt werden kann. Die vom Bildsensor 20 erfasste Messumgebung wird dadurch scharf abgebildet.

Durch das strahlteilende Umlenkelement 19' wird ein Teil des von der Strahlungsquelle 8 emittierten Lichtes direkt auf den Empfänger 15 geleitet, so dass eine geräteinterne Referenzstrecke realisiert wird, die auch in dieser Ausführungsform zur Systemkalibration geeignet ist.

Die Steuerung und Ausrichtung des scannenden Lichtstrahls kann in an sich bekannter Weise sowohl durch Schwenken des gesamten Gerätes als auch durch Verändern der Emissionsrichtung erfolgen. In diesem Beispiel wird explizit die Bewegung des gesamten Gerätes dargestellt, ohne dadurch andere Realisierungsformen, z.B. mit internen Stellelementen oder strahlmodifizierenden optischen Komponenten, auszuschliessen. In diesem Beispiel wird das gesamte Gerät um eine Horizontalachse HA und eine Vertikalachse VA schwenkbar gelagert, so dass durch das Zusammenspiel von horizontaler und vertikaler Schwenkbewegung eine Abtastbarkeit des gesamten Erfassungsbereichs realisiert ist.

Fig. 22 zeigt eine schematische Darstellung eines biaxialen Distanzmessers mit erfindungsgemässer Vorrichtung und umschaltfreiem internen Lichtweg zur zeitgleichen Kalibrierung. Von einer Strahlungsquelle 8, die zusammen mit einer Auswerteelektronik 10" auf einem gemeinsamen Trägerelement 9" angeordnet ist, wird Licht als Sendestrahl emittiert und über eine Sendeoptik 22 durch ein Austrittsfenster 21 auf ein Ziel 3a ausgesendet. Nach der Reflektion wird das Licht von einer Empfangsotik 13" erfasst und zur Signalverarbeitung auf den Empfänger 15 geführt. Das Signal des Empfängers 15 wird durch die Auswerteelektronik 10" verarbeitet und die Entfernungsinformation abgeleitet. Ein Teil des Sendestrahls wird am Austrittsfenster 21 reflektiert und trifft auf den biaxial angeordenten Empfänger 15. Ort und Stärke der Reflexion kann durch geeignete Oberflächenbehandung, z.B. durch eine Beschichtung oder das Aufbringen einer reflektierenden Komponente 23, auf dem Austrittsfenster 21 dimensioniert werden.

**Patentansprüche**

1.  Verfahren zur Ableitung geodätischer Entfernungsinformationen mit

    einem Signalgenerator zur Erzeugung von wenigstens zwei hochfrequenten Modulationsfrequenzen im MHz- bis GHz-Bereich;
    einem System (7) mit

    - einem Systemeingang,
    - einer optischen Strahlungsquelle (8),
    - wenigstens einem Zielobjekt (3,3a,3b) und
    - einem Empfänger (4,4',4") mit einem Systemausgang und;

    einer Auswerteelektronik (10,10',10");
    mit den Schritten

    - Anregen des Systems (7) mit wenigstens zwei, insbesondere synthetischen, Modulationsfrequenzen, vorzugsweise einer Schar diskreter Modulationsfrequenzen, durch Anlegen wenigstens eines Anregungssignals an den Systemeingang;
- Aufnehmen wenigstens einer Systemantwort (5,5') am Systemausgang;
- Ableiten mindestens einer Entfernungsinformation aus einer Signalform der wenigstens einen Systemantwort (5,5') durch die Auswerteelektronik (10,10',10'');

wobei beim Ableiten der mindestens einen Entfernungsinformation die Entfernungsinformation aus

- wenigstens einem Teil der Signalform der wenigstens einen Systemantwort (5,5') oder
- einer zeitlichen Struktur der Signalform der wenigstens einen Systemantwort (5,5')

abgeleitet wird.

2. Verfahren nach Anspruch 1,
**dadurch gekennzeichnet, dass**
beim Ableiten der mindestens einen Entfernungsinformation die Entfernungsinformation aus

- wenigstens dem Teil der Signalform der wenigstens einen Systemantwort (5,5') und
- der zeitlichen Struktur der Signalform der wenigstens einen Systemantwort (5,5')

abgeleitet wird.

3. Verfahren nach Anspruch 1 oder 2,
**dadurch gekennzeichnet, dass**
beim Anregen des Systems (7) das wenigstens eine Anregungssignal so gewählt wird, dass das Anregungssignal in der Frequenzdomäne entweder genau eine Spektrallinie oder eine Schar von Spektrallinien aufweist.

4. Verfahren nach Anspruch 3,
**dadurch gekennzeichnet, dass**
beim Anregen des Systems (7) das wenigstens eine Anregungssignal so gewählt wird, dass das Anregungssignal in der Frequenzdomäne eine grundharmonische und mehrere höherharmonische Spektrallinien aufweist.

5. Verfahren nach einem der vorangehenden Ansprüche,
**dadurch gekennzeichnet, dass**
die Schritte

- Anregen des Systems (7);
- Aufnehmen wenigstens einer Systemantwort;
- Ableiten mindestens einer Entfernungsinformation;

wenigstens einmal ganz oder teilweise wiederholt werden, wobei beim Anregen des Systems (7) die Modulationsfrequenzen bei jeder Wiederholung variiert werden.

6. Verfahren nach einem der vorangehenden Ansprüche,
**dadurch gekennzeichnet, dass**
beim Anregen des Systems (7) die Modulationsfrequenzen so erzeugt werden, dass diese höher als 10 MHz sind.

7. Verfahren nach einem der vorangehenden Ansprüche,
**dadurch gekennzeichnet, dass**
beim Anregen des Systems (7) das wenigstens eine Anregungssignal so erzeugt wird, das eine zeitliche Periodizität aufweist.

8. Verfahren nach Anspruch 7,
**dadurch gekennzeichnet, dass**
beim Anregen des Systems (7) das wenigstens ein Anregungssignal so erzeugt wird, dass es eine der folgenden Pulsformen aufweist

- Sinus
- Rechteck

- Dreieck
- Dirac-Impuls
- Impulsschar.

**9.** Verfahren nach Anspruch 7 oder 8,
**dadurch gekennzeichnet, dass**
das Anregen des Systems (7) mit wenigstens zwei Anregungssignalen erfolgt, die unterschiedliche Repetitionsfrequenzen aufweisen.

**10.** Verfahren nach einem der vorangehenden Ansprüche,
**dadurch gekennzeichnet, dass**
beim Anregen des Systems (7) die Modulationsfrequenzen nach einem der folgenden Schemata gewählt werden

- äquidistanter Frequenzabstand,
- logarithmisch-äquidistanter Frequenzabstand,
- Frequenzabstand entsprechend einer Teilfolge von Primzahlen,
- Frequenzabstand entsprechend einer Teilfolge von Fibonacci-Zahlen,
- mindestens 2 Frequenzgruppen, wobei die

Modulationsfrequenzen innerhalb jeder Gruppe äquidistanten Frequenzabstand aufweisen.

**11.** Verfahren nach einem der vorangehenden Ansprüche,
**dadurch gekennzeichnet, dass**
beim Aufnehmen der wenigstens einen Systemantwort (5,5') das einer Systemantwort (5,5') zugeordnete Frequenzspektrum bandbegrenzt wird.

**12.** Verfahren nach einem der vorangehenden Ansprüche,
**dadurch gekennzeichnet, dass**
beim Anregen des Systems (7) und Aufnehmen der wenigstens einen Systemantwort (5,5') für jedes an den Systemeingang angelegte Anregungssignal eine Abtastung der zugehörigen Systemantwort (5,5'), insbesondere eine äquitemporale Abtastung, durchgeführt wird.

**13.** Verfahren nach einem der vorangehenden Ansprüche,
**dadurch gekennzeichnet, dass**
beim Ableiten mindestens einer Entfernungsinformation die Entfernungsinformation direkt in der Zeitdomäne durch Auswertung der Signalformen und den zeitlichen Verschiebungen von wenigstens zwei Systemantworten (5,5') abgeleitet wird.

**14.** Verfahren nach einem der Ansprüche 1 bis 12,
**dadurch gekennzeichnet, dass**
beim Ableiten mindestens einer Entfernungsinformation die Entfernungsinformation in der Frequenzdomäne abgeleitet wird, insbesondere nach einer Laplace- oder Fourier-Transformation des Zeitsignals der wenigstens einen Systemantwort (5,5'), vorzugsweise unter stochastischer Gewichtung ermittelt durch wenigstens eine Rauschmessung an der wenigstens einen Systemantwort (5,5').

**15.** Verfahren nach Anspruch 13 oder 14,
**dadurch gekennzeichnet, dass**
beim Ableiten mindestens einer Entfernungsinformation eine Systemkalibrierung, insbesondere über eine systeminterne optische Referenzstrecke, durchgeführt wird.

**16.** Verfahren nach einem der Ansprüche 13, 14 oder 15,
**dadurch gekennzeichnet, dass**
die mindestens eine Entfernungsinformation mittels nichtlinearer Ausgleichsrechnung abgeleitet wird.

**17.** Verfahren nach einem der Ansprüche 14 bis 15,
**dadurch gekennzeichnet, dass**
die mindestens eine Entfernungsinformation mittels Parameteroptimierung einer Kostenfunktion, insbesondere unter Verwendung eines Maximum-Likelihood-Schätzers, abgeleitet wird.

**18.** Verfahren nach Anspruch 17,
**dadurch gekennzeichnet, dass**
in der Kostenfunktion die Informationen aus einem Aggregat von wenigstens zwei Systemantworten (5,5') berücksichtigt und ausgewertet werden.

**19.** Verfahren nach Anspruch 17,
**dadurch gekennzeichnet, dass**
in der Kostenfunktion die Informationen jeweils einer einzelnen Systemantwort (5,5') berücksichtigt und ausgewertet werden.

**20.** Verfahren nach einem der Ansprüche 1 bis 12,
**dadurch gekennzeichnet, dass**
beim Ableiten mindestens einer Entfernungsinformation die Entfernungsinformation nach einer Transformation der wenigstens einen Systemantwort (5,5') in die Frequenzdomäne und einer nachfolgenden Konstruktion eines Zeitsignals (6,6') in der Zeitdomäne durch eine inverse Transformation abgeleitet wird.

**21.** Verfahren nach Anspruch 20,
**dadurch gekennzeichnet, dass**
in der Frequenzdomäne wenigstens zwei Systemantworten (5,5') zu einem Aggregat zusammengefasst werden, aus dem die Konstruktion des Zeitsignals (6,6') in der Zeitdomäne erfolgt.

**22.** Verfahren nach Anspruch 20,
**dadurch gekennzeichnet, dass**
in der Frequenzdomäne eine erste Schar äquidistanter, komplexer Spektrallinien zusammengefasst werden, aus dem die Konstruktion eines ersten Zeitsignals (6,6') in der Zeitdomäne erfolgt und zudem eine zweite Schar äquidistanter, komplexer Spektrallinien zusammengefasst werden, aus dem die Konstruktion eines zweiten Zeitsignals (6,6') in der Zeitdomäne erfolgt.

**23.** Vorrichtung zur Durchführung des Verfahrens nach einem der Ansprüche 1 bis 22, mit

    a. einem Signalgenerator zur Erzeugung von Modulationsfrequenzen;
    b. einem System mit

        • einem Systemeingang,
        • einer optischen Strahlungsquelle (8),
        • wenigstens einem Zielobjekt (3,3a,3b) und
        • einem Empfänger (15) mit einem Systemausgang; und

    c. einer Auswerteelektronik (10,10',10");

**dadurch gekennzeichnet, dass**
der Signalgenerator wenigstens einen Direct Digital Synthesizer oder Fractional-N-Synthesizer aufweist.

**24.** Vorrichtung nach Anspruch 23,
**dadurch gekennzeichnet, dass**
dem digitalen Signalgenerator ein quarzstabiler Masteroszillator vorgeschaltet ist.

**25.** Vorrichtung nach Anspruch 23 oder 24,
**dadurch gekennzeichnet, dass**
dem digitalen Signalgenerator ein elektronischer Frequenzkonverter zur schnellen Umschaltung und Filterung der Modulationsfrequenzen zugeordnet ist, insbesondere als ASIC mit Frequenzteiler, Frequenzvervielfacher und Frequenzumschalter.

**26.** Vorrichtung nach einem der Ansprüche 23 bis 25,
**dadurch gekennzeichnet, dass**
dem digitalen Signalgenerator eine Nachlaufsynchronisation mit spannungsgesteuertem Oszillator zur Erzeugung von Mischerfrequenzen für den heterodynen Signalempfang zugeordnet ist.

**27.** Vorrichtung nach einem der Ansprüche 23 bis 26,
**dadurch gekennzeichnet, dass**
der Signalgenerator zur Erzeugung von Modulationsfrequenzen über 10 MHz ausgebildet ist.

**28.** Vorrichtung nach einem der Ansprüche 23 bis 26,
**gekennzeichnet durch**
einen, vorzugsweise einstellbaren, Tief- oder Bandpassfilter im Empfangsteil des Systemausgangs.

**29.** Geodätisches Messinstrument, insbesondere Theodolit, mit einer Vorrichtung nach einem der Ansprüche 23 bis 28
zur Distanzmessung zu einem oder gleichzeitig mehreren Objekten (3,3a,3b).

**30.** Geodätisches Messinstrument nach Anspruch 29,
**gekennzeichnet durch**
eine instrumenteninterne reflektierende Komponente (23), vorzugsweise einer reflektierenden Beschichtung an der Innenseite eines der Strahlungsquelle (8) zugeordneten Austrittsfensters (21), zur Definition einer systeminternen Referenzstrecke.

**31.** Scanner zur dreidimensionalen Abtastung eines aufzunehmenden Bildes mit einer Vorrichtung nach einem der Ansprüche 23 bis 28.

**32.** Verwendung einer Vorrichtung nach einem der Ansprüche 23 bis 28 zur Steuerung eines Autofokus.

**33.** Verwendung einer Vorrichtung nach einem der Ansprüche 23 bis 30 als mehrzielfähiger Distanzmesser, wobei eine umschaltfreie, systeminterne optische Referenzstrecke ein erstes zu vermessendes Zielobjekt definiert.

**34.** Verwendung einer Vorrichtung nach einem der Ansprüche 23 bis 31 als Distanzmesser mit simultaner Mehrfachmodulation zur schnellen 3-dimensionalen Objektvermessung.


**Claims**

**1.** Method for extracting geodetic distance information, having
a signal generator for generating at least two high frequency modulation frequencies in the MHz to GHz region;
a system (7), having

   • a system input,
   • an optical radiation source (8),
   • at least one target object (3, 3a, 3b) and
   • a receiver (4, 4', 4") with a system output; and

an evaluation electronics (10, 10', 10");
having the steps of

   - exciting the system (7) with at least two, in particular synthetic, modulation frequencies, preferably a set of discrete modulation frequencies, by applying at least one excitation signal to the system input;
   - recording at least one system response (5, 5') at the system output;
   - extracting at least one distance information item from a signal shape of the at least one system response (5, 5') by using the evaluation electronics (10, 10', 10");

in the case of the extraction of the at least one distance information item the distance information item being extracted from

   - at least one part of the signal shape of the at least one system response (5, 5'), or
   - a temporal structure of the signal shape of the at least one system response (5, 5').

**2.** Method according to Claim 1, **characterized in that**, in the case of the extraction of the at least one distance information item, the distance information item is extracted from

- at least the part of the signal shape of the at least one system response (5, 5'), and
- the temporal structure of the signal shape of the at least one system response (5, 5').

3. Method according to Claim 1 or 2, **characterized in that**, in the case of the excitation of the system (7), the at least one excitation signal is selected so that the excitation signal has either exactly one spectral line or a set of spectral lines in the frequency domain.

4. Method according to Claim 3, **characterized in that**, in the case of the excitation of the system (7), the at least one excitation signal is selected so that the excitation signal has one fundamental-harmonic and a plurality of higher-harmonic spectral lines in the frequency domain.

5. Method according to any one of the preceding claims, **characterized in that** the steps of

- exciting the system (7);
- recording at least one system response;
- extracting at least one distance information item;

are repeated at least once entirely or in part, in the case of the excitation of the system (7) the modulation frequencies being varied with each repetition.

6. Method according to any one of the preceding claims, **characterized in that**, in the case of the excitation of the system (7), the modulation frequencies are generated so that they are higher than 10 MHz.

7. Method according to any one of the preceding claims, **characterized in that**, in the case of the excitation of the system (7), the at least one excitation signal is generated so that it has a temporal periodicity.

8. Method according to Claim 7, **characterized in that**, in the case of the excitation of the system (7), the at least one excitation signal is generated so that it has one of the following pulse shapes

- sinusoidal
- rectangular
- triangular
- Dirac-pulse
- pulse set.

9. Method according to Claim 7 or 8, **characterized in that** the excitation of the system (7) is performed with at least two excitation signals which have different repetition frequencies.

10. Method according to any one of the preceding claims, **characterized in that**, in the case of the excitation of the system (7), the modulation frequencies are selected in accordance with one of the following schemes

- equidistant frequency spacing,
- logarithmic equidistant frequency spacing,
- frequency spacing corresponding to a sub-sequence of prime numbers,
- frequency spacing corresponding to a sub-sequence of Fibonacci numbers,
- at least 2 frequency groups, the modulation frequencies having an equidistant frequency spacing within each group.

11. Method according to one of the preceding claims, **characterized in that**, in the case of the recording of the at least one system response (5, 5'), the frequency spectrum assigned to a system response (5, 5') is bandlimited.

12. Method according to any one of the preceding claims, **characterized in that**, in the case of the excitation of the system (7) and recording of the at least one system response (5, 5'), a scanning of the associated system response (5, 5'), in particular an equitemporal scanning, is carried out for each excitation signal applied to the system input.

13. Method according to any one of the preceding claims, **characterized in that**, in the case of the extraction of at least one distance information item, the distance information item is extracted directly in the time domain by evaluating the signal shapes and the time shifts of at least two system responses (5, 5').

14. Method according to any one of Claims 1 to 12, **characterized in that**, in the case of the extraction of at least one distance information item, the distance information item is extracted in the frequency domain, in particular after a Laplace or Fourier transformation of the time signal of the at least one system response (5, 5'), preferably with stochastic weighting determined by at least one noise measurement on the at least one system response (5, 5').

15. Method according to Claim 13 or 14, **characterized in that**, in the case of extraction of at least one distance information item, a system calibration is carried out, in particular over a system-internal optical reference distance.

16. Method according to any one of Claims 13, 14 or 15, **characterized in that** the at least one distance information item is extracted by means of non-linear compensation calculation.

17. Method according to any one of Claims 14 to 15, **characterized in that** the at least one distance information item is extracted by means of parameter optimization of a cost function, in particular by using a maximum likelihood estimator.

18. Method according to Claim 17, **characterized in that** the information from an aggregate of at least two system responses (5, 5') is taken into account and evaluated in the cost function.

19. Method according to Claim 17, **characterized in that** the information of in each case a single system response (5, 5') is taken into account and evaluated in the cost function.

20. Method according to any one of Claims 1 to 12, **characterized in that**, in the case of the extraction of at least one distance information item, the distance information item is extracted by an inverse transformation after a transformation of the at least one system response (5, 5') into the frequency domain and a subsequent construction of a time signal (6, 6') in the time domain.

21. Method according to Claim 20, **characterized in that**, in the frequency domain, at least two system responses (5, 5') are combined to form an aggregate from which the construction of the time signal (6, 6') in the time domain is performed.

22. Method according to Claim 20, **characterized in that**, in the frequency domain, a first set of equidistant, complex spectral lines is composed, from which the construction of a first time signal (6, 6') in the time domain is performed, and in addition a second set of equidistant, complex spectral lines is composed, from which the construction of a second time signal (6, 6') in the time domain is performed.

23. Device for carrying out the method according to any one of Claims 1 to 22, having

    a. a signal generator for generating modulation frequencies;
    b. a system having

        • a system input,
        • an optical radiation source (8),
        • at least one target object (3, 3a, 3b) and
        • a receiver (15) with a system output; and

    c. an evaluation electronics (10, 10', 10");

    **characterized in that** the signal generator has at least one direct digital synthesizer or fractional-N-synthesizer.

24. Device according to Claim 23, **characterized in that** a quartz-stable master oscillator is connected upstream of the digital signal generator.

25. Device according to Claim 23 or 24, **characterized in that** the digital signal generator is assigned an electronic frequency converter for rapid switching and filtering of the modulation frequencies, in particular as ASIC with frequency divider, frequency multiplier and frequency changeover switch.

26. Device according to any one of Claims 23 to 25, **characterized in that** the digital signal generator is assigned a tracking synchronization with voltage-controlled oscillator for generating mixer frequencies for the heterodyne signal reception.

**27.** Device according to any one of Claims 23 to 26, **characterized in that** the signal generator is designed for generating modulation frequencies above 10 MHz.

**28.** Device according to any one of Claims 23 to 26, **characterized by** a, preferably adjustable, low-pass or bandpass filter in the receiving part of the system output.

**29.** Geodetic measuring instrument, in particular a theodolite, having a device according to any one of Claims 23 to 28 for distance measurement in relation to one object or a plurality of objects (3, 3a, 3b) at the same time.

**30.** Geodetic measuring instrument according to Claim 29, **characterized by** an instrument-internal reflecting component (23), preferably a reflecting coating on the inside of an exit window (21), assigned to the radiation source (8), for defining a system-internal reference distance.

**31.** Scanner for three-dimensional scanning of an image to be recorded, having a device according to any one of Claims 23 to 28.

**32.** Use of a device according to any one of Claims 23 to 28 for controlling an autofocus.

**33.** Use of a device according to any one of Claims 23 to 30 as a distance meter with multitarget capabilities, a nonswitching, system-internal optical reference path defining a first target object to be measured.

**34.** Use of a device according to any one of Claims 23 to 31 as distance meter with simultaneous multiple modulation for rapid 3-dimensional object measuring.

**Revendications**

**1.** Procédé d'extraction d'informations géodésiques de distance, avec :

un générateur de signal pour produire au moins deux fréquences de modulation à haute fréquence, dans la plage des MHz à celle des GHz ;
un système (7), avec :

• une entrée système,
• une source de rayonnement optique (8),
• au moins un objet cible (3,3a,3b), et
• un récepteur (4,4',4") avec une sortie système ; et

une électronique d'évaluation (10, 10', 10") ;

comprenant les étapes ci-après :

- excitation du système (7) avec au moins deux fréquences de modulation, en particulier synthétiques, de préférence d'un groupe de fréquences de modulation discrètes, par application d'au moins un signal d'excitation à l'entrée système ;
- enregistrement d'au moins une réponse de système (5,5') à la sortie système ;
- extraction d'au moins une information de distance, à partir d'une forme de signal de la au moins une réponse de système (5,5'), au moyen de l'électronique d'évaluation (10, 10', 10") ;

où, lors de l'extraction de la au moins une information de distance, l'information de distance est extraite à partir

- d'au moins une partie de la forme de signal de la au moins une réponse de système (5,5'), ou
- d'une structure temporelle de la forme de signal de la au moins une réponse de système (5,5').

**2.** Procédé selon la revendication 1,
**caractérisé en ce que**

lors de l'extraction de la au moins une information de distance, l'information de distance est extraite à partir

- d'au moins la partie de la forme de signal de la au moins une réponse de système (5,5'), et
- de la structure temporelle de la forme de signal de la au moins une réponse de système (5,5').

3. Procédé selon la revendication 1 ou 2,
**caractérisé en ce que**
lors de l'excitation du système (7), le au moins un signal d'excitation est choisi de manière que ce signal d'excitation présente, dans le domaine des fréquences, soit précisément une ligne spectrale, soit un groupe de lignes spectrales.

4. Procédé selon la revendication 3,
**caractérisé en ce que**
lors de l'excitation du système (7), le au moins un signal d'excitation est choisi de manière que ce signal d'excitation présente, dans le domaine des fréquences, une ligne spectrale harmonique fondamentale, et plusieurs lignes spectrales harmoniques d'ordre supérieur.

5. Procédé selon l'une des revendications précédentes,
**caractérisé en ce que**
les étapes

- excitation du système (7) ;
- enregistrement d'au moins une réponse de système ;
- extraction d'au moins une information de distance ;

sont accomplies de manière répétée, au moins une fois, en totalité ou partiellement, les fréquences de modulation étant changées à chaque répétition lors de l'excitation du système (7).

6. Procédé selon l'une des revendications précédentes,
**caractérisé en ce que**,
lors de l'excitation du système (7), les fréquences de modulation sont générées de manière qu'elles soient supérieures à 10 MHz.

7. Procédé selon l'une des revendications précédentes,
**caractérisé en ce que**,
lors de l'excitation du système (7), le au moins un signal d'excitation est généré de manière qu'il présente une périodicité temporelle.

8. Procédé selon la revendication 7,
**caractérisé en ce que**,
lors de l'excitation du système (7), le au moins un signal d'excitation est généré de manière qu'il présente l'une des formes d'impulsion suivantes :

- sinusoïdale
- rectangulaire,
- triangulaire,
- impulsion Dirac,
- groupe d'impulsions.

9. Procédé selon la revendication 7 ou 8,
**caractérisé en ce que**
l'excitation du système (7) s'effectue avec au moins deux signaux d'excitation, présentant des fréquences de répétition différentes.

10. Procédé selon l'une des revendications précédentes,
**caractérisé en ce que**
lors de l'excitation du système (7), les fréquences de modulation sont choisies selon l'un des schémas suivants :

- espacement de fréquences équidistantes,

- espacement de fréquences logarithmiquement équidistantes,
- espacement de fréquences correspondant à une suite partielle de nombres premiers,
- espacement de fréquences correspondant à une suite partielle de nombres de la suite de Fibonacci,
- au moins 2 groupes de fréquences, les fréquences de modulation présentant un espacement de fréquences équidistant à l'intérieur de chaque groupe.

**11.** Procédé selon l'une des revendications précédentes,
**caractérisé en ce que**,
lors de l'enregistrement de la au moins une réponse de système (5,5'), le spectre de fréquences associé à une réponse de système (5,5') est limité en bande.

**12.** Procédé selon l'une des revendications précédentes,
**caractérisé en ce que**,
lors de l'excitation du système (7) et de l'enregistrement de la au moins une réponse de système (5,5'), une exploration de la réponse de système (5,5') afférente, en particulier une exploration équi-temporaire, est effectuée pour chaque signal d'excitation appliqué à l'entrée système.

**13.** Procédé selon l'une des revendications précédentes,
**caractérisé en ce que**,
lors de l'extraction d'au moins une information de distance, cette information de distance est extraite directement dans le domaine des temps, par évaluation des formes de signaux et par les décalages temporels d'au moins deux réponses de système (5,5').

**14.** Procédé selon l'une des revendications 1 à 12,
**caractérisé en ce que**,
lors de l'extraction d'au moins une information de distance, cette information de distance est extraite dans le domaine des fréquences, en particulier après une transformation de Laplace ou de Fourier du signal de temps de la au moins une réponse de système (5,5'), de préférence en procédant à une pondération stochastique, par au moins une mesure de bruit à la au moins une réponse de système (5,5').

**15.** Procédé selon la revendication 13 ou 14,
**caractérisé en ce que**,
lors de l'extraction d'au moins une information de distance, un calibrage système est effectué, en particulier sur un chemin de référence optique interne au système.

**16.** Procédé selon la revendication 13, 14 ou 15,
**caractérisé en ce que**
la au moins une information de distance est extraite au moyen d'un calcul d'ajustement de données non linéaire.

**17.** Procédé selon l'une des revendications 14 à 15,
**caractérisé en ce que**
la au moins une information de distance est extraite au moyen d'une optimisation de paramètres d'une fonction coût, en particulier en utilisant un estimateur du maximum de vraisemblance.

**18.** Procédé selon la revendication 17,
**caractérisé en ce que**,
dans la fonction coût, les informations émanant d'un agrégat d'au moins deux réponses de système (5,5') sont prises en considération et évaluées.

**19.** Procédé selon la revendication 17,
**caractérisé en ce que**,
dans la fonction coût, les informations chaque fois d'une réponse de système (5,5') individuelle sont prises en considération et évaluées.

**20.** Procédé selon l'une des revendications 1 à 12,
**caractérisé en ce que**,
lors de l'extraction d'au moins une information de distance, cette information de distance est extraite après une transformation de la au moins une réponse de système (5,5') dans le domaine des fréquences, et une construction subséquente d'un signal de temps (6,6') dans le domaine des temps, au moyen d'une transformation inverse.

**21.** Procédé selon la revendication 20,
**caractérisé en ce que**,
dans le domaine des fréquences, au moins deux réponses de système (5,5') sont regroupées en un agrégat, à partir duquel la construction du signal de temps (6,6') dans le domaine des temps s'effectue.

**22.** Procédé selon la revendication 20,
**caractérisé en ce que**,
dans le domaine des fréquences, un premier groupe de lignes spectrales complexes, équidistantes, sont regroupées, à partir duquel est effectuée la construction d'un premier signal de temps (6,6') dans le domaine des temps, et, de plus, un deuxième groupe de lignes spectrales complexes, équidistantes sont regroupées, à partir duquel est effectuée la construction d'un deuxième signal de temps (6,6') dans le domaine des temps.

**23.** Dispositif de mise en oeuvre du procédé selon l'une des revendications 1 à 22, avec :

    a. un générateur de signal pour générer des fréquences de modulation ;
    b. un système, avec

        • une entrée système,
        • une source de rayonnement optique (8),
        • au moins un objet cible (3,3a,3b), et
        • un récepteur (4,4',4") avec une sortie système ; et

    c. une électronique d'évaluation (10, 10', 10") ;

**caractérisé en ce que**
le générateur de signal présente au moins un Synthétiseur Numérique Direct ou un Synthétiseur-N-fractionnaire.

**24.** Dispositif selon la revendication 23,
**caractérisé en ce qu'**
un oscillateur maître stabilisé par quartz est branché en amont du générateur de signal numérique.

**25.** Dispositif selon la revendication 23 ou 24,
**caractérisé en ce qu'**
un convertisseur de fréquence électronique, pour la commutation rapide et le filtrage des fréquences de modulation, est associé au générateur de signal numérique, en particulier convertisseur réalisé sous forme de circuit ASIC avec diviseur de fréquence, multiplicateur de fréquence et commutateur de fréquence.

**26.** Dispositif selon la revendication 23 à 25,
**caractérisé en ce qu'**
une synchronisation de poursuite, avec oscillateur commandé en tension, pour générer des fréquences de mélangeur pour la réception de signal hétérodyne, est associée au générateur de signal numérique.

**27.** Dispositif selon la revendication 23 à 26,
**caractérisé en ce que**
le générateur de signal est réalisé pour générer des fréquences de modulation supérieures à 10 MHz.

**28.** Dispositif selon la revendication 23 à 26,
**caractérisé par**
un filtre passe-bas ou passe-bande, de préférence réglable, dans la partie réception de la sortie système.

**29.** Instrument de mesure géodésique, en particulier théodolite, avec un dispositif selon l'une des revendications 23 à 28, pour la mesure de distance à un ou plusieurs objets (3,3a,3b) simultanément.

**30.** Instrument de mesure géodésique selon la revendication 29,
**caractérisé par**
un composant (23), réfléchissant de manière interne à l'instrument, de préférence un revêtement réfléchissant sur la face intérieure d'une fenêtre de sortie (21) associée à la source de rayonnement (8), pour la définition d'un chemin de référence interne au système.

31. Scanneur, pour l'exploration tridimensionnelle d'une image à enregistrer, avec un dispositif selon l'une des revendications 23 à 28.

32. Utilisation d'un dispositif selon l'une des revendications 23 à 28, pour la commande d'une mise au point automatique.

33. Utilisation d'un dispositif selon l'une des revendications 23 à 30, en tant que télémètre à capacité de plusieurs cibles, un chemin de référence optique, interne au système, exempte de commutation, définissant un premier objet cible dont le relevé est à effectuer.

34. Utilisation d'un dispositif selon l'une des revendications 23 à 31, en tant que télémètre à modulation multiple simultanée, pour le relevé d'objet tridimensionnel rapide.

$\mathfrak{Fig.}$ $1a$

$\mathfrak{Fig.}$ $1b$

$\mathfrak{Fig.}$ $2a$

$\mathfrak{Fig.}$ $2b$

$Fig. 3$

$Fig. 4$

Fig. 5a

$\mathcal{F}ig.\ 5b$

$\mathcal{F}ig.\ 6a$

$\mathcal{F}ig.\ 6b$

*Fig. 7*

*Fig. 8*

$|S(f)|$

$f$

$f$

$\log f$

$\mathcal{F}ig.\ 9$

$|S(f)|$

$f$

$|S(f)|$

$\log f$

Fig. 10

$|S(f)|$

$f$

Fig. 11

Re[z(t)]

$\mathcal{F}ig.12$

| Z(t) |

$\mathcal{F}ig.13$

| Z1(t) |

| Z2(t) |

$\mathcal{F}ig.14$

| P1(t) |

| P2(t) |

Fig.15

Fig.16

$\mathcal{F}ig.17$

$\mathcal{F}ig.18$

Fig.19

Fig.20

15
20
16
13'
12'
14'
HA
3a
12
8
9'   10'   19'
VA

𝕱ig.21

13''
21
15
22   23
8
9''   10''

𝕱ig.22

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0738899 A
- EP 0932835 A

- DE 4002356

**In der Beschreibung aufgeführte Nicht-Patentliteratur**

- **VON R. JOECKEL ; M. STOBER.** Elektronische Entfernungs- und Richtungsmessung. Verlag Konrad Wittwer, 1999